# EUROPÄISCHE PATENTSCHRIFT

(11) **EP 0 728 713 B1**
(45) Veröffentlichungstag und Bekanntmachung des Hinweises auf die Patenterteilung: **02.05.2001**
(21) Anmeldenummer: 96101401.6
(22) Anmeldetag: 01.02.1996
(51) Int. Cl.: C04B 7/04, C01B 17/50, F27B 7/24, F27B 7/36, F23D 17/00, F27D 17/00, F28B 3/04, B01D 53/50, B01D 53/78, B01D 53/86, C01B 17/74

(54) **Verfahren zur Verwertung von Reststoffen bei der Zementherstellung**
Process for using waste materials for making cement
Procédé d'utilisation de matériaux de déchets pour la fabrication de ciment

(30) Priorität: 13.02.1995 DE 19504668; 24.01.1996 DE 19602321
(43) Veröffentlichungstag der Anmeldung: 28.08.1996
(73) Patentinhaber: Directional Drilling Tool AG, 6300 Zug (CH)
(72) Erfinder: Meininger, Siegfried, Dipl.-Ing., D-45259 Essen (DE); Reimann, Hanno, Dipl.-Volksw., D-45133 Essen (DE); Reimann, Götz, Dipl. rer. pol. techn., D-45470 Mülheim (DE)
(74) Vertreter: Schulte, Jörg, Dipl.-Ing.

(56) Entgegenhaltungen:
- EP-A- 0 254 330
- EP-A- 0 484 777
- DD-B- 152 122
- DE-A- 1 571 618
- DE-A- 1 646 647
- DE-A- 3 234 281
- DE-C- 4 241 540
- US-A- 2 528 103
- DR. FOERST W.: "Ullmanns Enzyklopädie der technischen Chemie" 1964 , URBAN & SCHWARZENBERG , MÜNCHEN, DE XP002088977 * Seite 411 - Seite 412, Absatz 1; Abbildung 18 *
- HAASE R.: "Werkstoffe aus Rückständen" CHEMISCHE RUNDSCHAU, Bd. 46, Nr. 38, September 1993, Seite 11 XP000195939 Weinheim, De

## Beschreibung

Die Erfindung betrifft ein Verfahren zur Verwertung von Reststoffen, die bei der Herstellung von Zement und Schwefelsäure nach dem sogenannten Müller-Kühne-Verfahren mit dem Rohmehl dem Drehrohrofen in aufbereiteter Form aufgegeben und unter Zuhilfenahme von ebenfalls teilweise aus Reststoffen bestehendem chemisch reaktiven Kohlenstoff bei über 700 °C mit dem Calciumsulfat gespalten werden, wobei das CaO dann bei über 1 200 °C in Gegenwart von SiO₂, Al₂O₃ und Fe₂O₃ zu Zement gebrannt und das SO₂-haltige Rauchgas von Staub befreit, gewaschen, mit Luft gemischt und zu SO₃ bzw. H₂SO₄ umgesetzt wird. Die Erfindung betrifft außerdem eine Anlage zur Durchführung des Verfahrens mit einer Zerkleinerungseinrichtung für die Rohmehlkomponenten, Silos, Trockentrommeln, einer Endzerkleinerungseinrichtung, dem Rohmehlsilo, dem Drehrohrofen, dem Brenner mit Brennerrohr, dem Klinkeraustrag und der Zementaufbereitung, der Rauchgasaustrittskammer, dem Entstauber, der Rauchgaswäsche und der H₂SO₄-Fabrik.

Das Müller-Kühne-Verfahren beruht auf der reduzierenden Spaltung von Calciumsulfat oberhalb von 700°C mit Hilfe von Kohlenstoff. Das dabei sich intermedier bildende Calciumsulfit reagiert mit dem überschüssigen Calciumsulfat zu Calciumoxyd und Schwefeldioxyd. Der beim Brennen des CaO entstehende Zementklinker besteht im wesentlichen aus Tricalciumsilikat, Dicalciumsilikat, Tricalciumaluminat und Tetracalciumaluminatferrit. Als Ausgangsmaterial für das klassische Verfahren wurden im wesentlichen die Naturstoffe Anhydrit, Koks, Rohton, Rohsand, Kies, Abbrand, Gips und Braunkohlenstaub angewendet. Die feuchten Ausgangsstoffe wurden getrocknet, gewichtsdosiert und anschließend in einer Kugelmühle zerkleinert und gemischt. Das so erhaltene Rohmehl wird in einen leicht geneigten Drehrohrofen eingebracht und durchläuft diesen im Gegenstrom zum Brenngas, wobei in der Regel Braunkohlenstaub verwendet wurde. Dieses klassische Gipsschwefelsäureverfahren ist herkömmlichen Zementherstellungsverfahren wirtschaftlich unterlegen. Die Wirtschaftlichkeit kann aber durch Verwertung von Reststoffen aus anderen Herstellungsprozessen, die nur mit Problemen abgelagert werden könne, angehoben werden. Die Substitution der traditionellen Naturrohstoffe und des Primärenergieträgers Braunkohle durch geeignete stofflich und/oder energetisch verwertbare Reststoffe stellt insbesondere in der derzeitigen Situation einen erheblichen Vorteil dar (Chemische Rundschau Nr. 38, 24. Sept. 1993, Seite 11). Erprobt worden sind verschiedenste Reststoffe wie Anfall-Gips, Brauchkalk, Anfallschwefelsäure, Säureteere, Säureharze, Braunkohlenfilterasche, Bauschutt, gebrauchte Porzellane, Bleicherde und vieles andere mehr. Nachteilig ist, daß entsprechende Rohmehlkomponenten aber auch die Brennstoffkomponenten unterschiedlichen Einfluß auf das Verfahren und auf die Endprodukte, d. h. sowohl den Zement wie auch die Schwefelsäure und das Oleum haben. Darüber hinaus ist eine immer gleichbleibende Verfahrensführung nicht gegeben, zumal auch die nachgeschalteten Betriebsbereiche wie beispielsweise die Entstaubung und die Gasaufbereitung in ihrer Effektivität durch die Zusammensetzung der Ausgangsprodukte stark beeinflußt sind.

Der Erfindung liegt daher die Aufgabe zugrunde, das Müller-Kühne-Verfahren so weiter zu entwickeln und eine Anlage zu schaffen, daß eine weitere Schonung von Ressourcen einerseits und Deponieraum andererseits unter voller Beachtung und Erfüllung der Umweltauflagen und der Wirtschaftlichkeit möglich wird.

Die Aufgabe wird erfindungsgemäß dadurch gelöst, daß die Rohmehlkomponenten und die Brennstoffkomponenten einschließlich der einzusetzenden Reststoffe inclusive der zur Eliminierung zementuntypischer Komponenten benötigten Ausgleichs- und Reaktionsstoffe getrennt gelagert, konditioniert und dann entsprechend vorgegebener Rezeptur und über Probenahme und -auswertung überwacht eingebracht werden, daß die flüssigen und festen als Brennstoff einzusetzendenReststoffe getrennt bis in den Drehrohrofen transportiert und dann mit einander unterstützender Flamme verbrannt werden und daß die Rauchgase unter Abdichtung des Ofenkopfes und der Rauchgasaustrittskammer durch Einspeisung von Kühlgas schockartig abgekühlt werden.

Die ankommenden Reststoffe werden ebenso wie die übrigen Rohmehl- und Brennstoffkomponenten getrennt gelagert und dann der jeweiligen Rezeptur entsprechend zerkleinert und homogenisiert, miteinander vermischt dem Prozeß zugeführt. Dadurch, daß die einzelnen Ausgangsprodukte vorher untersucht und auch während und nach ihrem Vermischen überprüft werden, kann jeweils ein Ausgangsprodukt zur Verfügung gestellt und eingebracht werden, das genau der vorgegebenen Rezeptur und damit einem optimalen Verfahrensablauf entspricht. Je nach Bedarf werden zur Eliminierung zementuntypische Komponenten Ausgleichsstoffe und Reaktionsstoffe zugeführt, die zu einer Nachverbrennung von Spurenverunreinigungen beispielsweise in der Grobstaubkammer führen, so daß Behinderungen des weiteren Verfahrens bzw. Probleme bezüglich des Klinkers nicht auftreten. So ist ein kontinuierlich gleichbleibender Prozeßablauf gesichert, obwohl unterschiedlichste Stoffe und auch in wechselnder Zusammensetzung eingesetzt werden. Dabei kann durch entsprechende Pufferbildung jeder Unterschied auf der Zeitschiene ausgeglichen werden, so daß auch beispielsweise durch die jahreszeitlichen Gegebenheiten in unterschiedlicher Menge anfallende Produkte über das Jahr gesehen in der jeweiligen Optimalmenge zur Verfügung stehen und auch entsprechend eingebracht werden können. Neben den Großanfallmengen, die aber ebenfalls nach Stoffgruppen ähnlicher Zusammensetzung zusammenzustellen sind, gibt es eine Reihe von wertvollen Konzentrationsprodukten für CaO, SiO₂, Al₂O₃ und Fe₂O₃, die zur Rezepturkorrektur gesammelt und bereit gehalten werden. Durch Zwischenprobenahme erhält man darüber hinaus Erkenntnisse mit daraus resultierenden Möglichkeiten der Korrektur des Rohmehlproduktes. Dabei kann eine ausreichende Analysengeschwindigkeit insbesondere dadurch gewährleistet werden, daß die Analsysenmethode weg vom Schmelzaufschluß hin zur "präparierten Tablette" umgestellt ist. Durch diese kontinuierliche Analsysenbegleitung kann die große Streubreite bzw. Bandbreite der Ausgangsbasis des Rohmehls vorteilhaft ausgeglichen werden. Über die Einstellung des Rohmehls kann der Ofenbetrieb und auch der erzeugte Klinker vergleichmäßigt werden. Dies garantiert eine Verbesserung zur gesicherten Reproduzierbarkeit des Klinkers und damit die einwandfreie Vorausbestimmung der Zementqualität. Die gemeinsame Zuführung der verschiedenen Brennstoffkomponenten bis in den Drehrohrofen hinein und die quasi einander unterstützende Verbrennung führt dazu, daß jeweils eine für den Umwandlungsprozeß vorteilhafte Flamme zur Verfügung steht. Insbesondere ist auch damit die Möglichkeit gegeben, über lange Zeiträume auf Festbrennstoff wie Kohle ganz zu verzichten und stattdessen Brennstoff-Reststoffe einzusetzen, wie beispielsweise mit Reststoffen getränkte Holzspäne und Sägemehl einzubringen, wobei eine vorteilhaft gleichmäßige Flamme gewährleistet ist. Die lange Flamme, die bei der Verbrennung von Sägemehl beispielsweise entsteht, wird durch die kurze Flamme des Lösemittels und die heizwertreiche und heiße Flamme des Altöls sowie des Säureteers und des Säureharzes vorteilhaft unterstützt. Die Flamme wird weit in den Drehrohrofen eingetragen und kann so zu einem vorteilhaften Brennprozeß sicher beitragen. Dadurch, daß die Rauchgase abgeschreckt, der Ofenkopf und die Rauchgasaustrittskammer abgedichtet sind, können vorteilhaft schädliche Alkaliniederschläge verhindert werden. Außerdem führt dieses Einspeisen von Kühlgas zur Erzeugung eines Unterdruckes, der den gesamten Brennprozeß vorteilhaft beeinflußt. Dieses Absaugen des Rauchgases macht sich bis in den Bereich des Klinkeraustrages hinein bemerkbar. Durch die größere Menge an Rauchgas, die den Drehrohrofen in der Zeiteinheit durchströmt, wird eine optimale Verbrennung der Reststoffe sichergestellt. Dabei sorgt die Abdichtung des Ofenkopfes dafür, daß sich dieser Sog für das Rauchgas weit in den Drehrohrofen hinein auswirkt, ohne daß an falschen Stellen Falschluft gezogen wird.

Nach einer zweckmäßigen Ausbildung der Erfindung ist vorgesehen, daß der Anhydrit-Anteil im Rohmehl zu 20 - 100 % durch Reststoffe ersetzt wird. Ein entsprechend hoher Anhydrit-Anteil war bisher erforderlich, um einen einigermaßen einwandfreien Betrieb zu gewährleisten. Aufgrund der erfindungsgemäßen Maßnahmen kann dieser Anhydrit-Anteil nun vorteilhaft auf Null gefahren werden. Das gleiche gilt auch für die übrigen Komponenten wie Sand, Ton und Eisenoxyd, die durch Kraftwerksofenaschen, Filterstäube u. ä. ersetzt werden.

Es wurde bereits darauf hingewiesen, daß der Ofenkopf abgedichtet sein muß, um das Absaugen der Rauchgase bis in den Drehrohrofen hinein wirksamwerden zu lassen. Ergänzend sieht die Erfindung vor, daß der anfallende, vorzugsweise am Ofenkopf anfallende Staub unter Wahrung der Abdichtung auf kurzem Weg in den Drehrohrofen zurückgefahren wird. Etwa 16 % des in den Drehrohrofen eingeführten Rohmehls wird als Staub ausgetragen und muß entsprechend behandelt und zurückgeführt werden, wobei die vorliegende, erfindungsgemäße Lösung sicherstellt, daß es im Drehrohrofen nicht zu einer fraktionsungleichen Abstaubungsabreicherung kommen kann. Vielmehr werden die Stäube ohne jede Zwischenlagerung sofort zurückgeführt, so daß negative Einflüsse auf die Qualität des Klinkers und die Verarbeitbarkeit nicht eintreten können. Eine weitere Verbesserung des Verfahrens wird dadurch erreicht, daß das Rauchgas nach Verlassen des Drehrohrofens mit Rohmehl beaufschlagt und dies erst dann und unter Zumischung des Staubes der Ofenaufgabe zugeführt wird. Das kalte Rohmehl bildet ansonsten den Kondensationspunkt für heißen und klebrigen Ausgangsstaub, der dann am Kaltstaub festbackt und gemeinsam und klebrig im anschließenden Zyklon der Ofenaufgabe zugeführt wird. Mit dem erfindungsgemäßen Verfahren dagegen, kann der bei der Entstaubung zurückgewonnene Staub kontinuierlich mit dem Rohmehl aufgegeben werden, so daß es nicht zu nachteiligen Rohmehlentmischungen im Drehrohrofen kommt. Zugleich führt die Vorwärmung des Rohmehls zu einer deutlichen Durchsatzerhöhung, ohne daß dazu Energie benötigt würde. Darüber hinaus werden die nachfolgenden Anlagenkomponenten vom problematischen, zum Anbacken neigenden Staub freigehalten, so daß höhere Standzeiten erreichbar sind.

Weiter vorne ist bereits darauf hingewiesen worden, daß es zweckmäßig und vorteilhaft ist, durch kontinuierliche Probenahme die einzelnen Komponenten zu analysieren und ihre Zugabe entsprechend zu kanalisieren, wozu das Verfahren vorsieht, daß die eingehenden Rohmehlkomponenten bzw. Reststoffe durch Probenahme analysiert, zwischengelagert, dosiert zugemischt werden und daß über Zwischenprobenahme und ggf. ergänzende Konditionierung und Zugabe von Korrekturen Anpassungen vorgenommen werden. Stellt sich dementsprechend heraus, daß die Verfahrensführung erschwert ist, kann durch gezielte Zugabe vorher analysierter und auch bei ihrer Zumischung noch überwachter Komponenten sowohl vom Rohmehl her wie auch vom Brennstoff her eine Unterstützung des Verfahrensablaufes erreicht werden.

Das Gesamtverfahren wird von Schwankungen der zugelieferten Produkte weitgehenst unabhängig, wenn wie erfindungsgemäß vorgesehen, feuchte und/oder grobstückige und/oder mit Kohlenwasserstoffen verunreinigte, mineralische Einsatzstoffe vor der Lagerung soweit erforderlich zerkleinert, getrocknet und ggf. einer Pyrolyse unterzogen und gemahlen werden. Hierdurch ist die Möglichkeit gegegen, auch unterschiedlichste Ausgangsprodukte sicher so weit vorzubereiten, daß sie dann verfahrensgemäß verarbeitet werden können.

Nach einer zweckmäßigen Weiterbildung der Erfindung ist vorgesehen, daß die Kohleeindüsung und/oder die Eindüsung des mit Kohlenwasserstoffen u. ä. getränkten Sägemehls und/oder die Schwefelsäureeindüsung unter gleichzeitiger Erzeugung eines von umgebenden Lanzen für Flüssigbrennstoffe erzeugten, umgebenden Brennmantels vorgenommen wird, wobei der Kohleanteil vorzugsweise ganz durch Kohlenwasserstoffe und/oder andere flüssige Reststoffe ersetzt wird. Diese Verfahrensführung relativiert somit die lange Flamme, die beim Verbrennen des Sägemehls entsteht, gezielt, wobei ja nach Anzahl der zum Einsatz kommenden Brennstoffkomponenten die einzelnen Leitungen und endseitig angeordneten Brenner den Austrag des Festbrennstoffrohres umgebend bzw. insbesondere unter ihm angeordnet sind, so daß die gezielte Beeinflussung des Sägemehlausbrandes gewährleistet ist.

Ergänzend oder statt der Rohmehlkomponentenkorrektur kann gemäß vorliegendem Verfahren auch eine Veränderung der Ofenfahrweise über die Drehzahl des Ofens und/oder die Brennstoff- und Sauerstoffzufuhr vorgenommen werden. Insbesondere die Zuführ von Sauerstoff zum Erzeugen einer stabilen Flamme stellt eine solche Korrekturmöglichkeit dar, aber auch wie erwähnt eine Erhöhung oder Verringerung der Drehzahl des Drehrohrofens.

Der bisherige Ofenbetrieb ist unter anderem problematisch, weil er im sensiblen Gleichgewichtszustand zwischen kohlebezogener Rauchgasmenge, natürlichem Ofenzug mit zusätzlicher Brennstoffstrahlwirkung bei der Einspeisung, Falschlufteinbruch und Gebläsesaugwirkung abläuft. Hier werden gemäß der Erfindung Probleme dadurch ausgeschaltet, daß am Ofenkopf bzw. der Rauchgasaustrittskammer und auch im noch staubenden Bereich einschließlich der Staubfördersysteme ein Unterdruck eingestellt und eingehalten wird. Dies wird dadurch erreicht, daß die Staubabfördersysteme abgedichtet und mit Schleusen versehen werden. In die Rauchgasstrecke wird ein Zwischengebläse im noch staubenden Bereich eingeschaltet, wobei die Druckverhältnisse einstellbar sind. Durch den am Ofenkopf eingestellten Unterdruck kann eine größere Rauchgasmenge durchgesetzt werden. Insgesamt ergibt sich somit ein deutlich stabilisierter Ofenbetrieb.

Um Rückstandssäuren in größeren Mengen einsetzenzukönnen, sieht die Erfindung vor, daß die Primärluft zur Erhöhung des H₂SO₄-Einsatzes und des Rohmehleinsatzes im Drehrohrofen mit Sauerstoff angereichert wird. Dabei kann die Primärluft soweit angereichert werden, daß Mengen von 2 500 kg H₂SO₄ pro Stunde und Ofen aufgegeben werden können. Der Ballaststickstoff im Rauchgas wird gesenkt und dafür SO₂-Gas durchgesetzt.

Zur Reduzierung der Gebläseleistung und auch eine Unterstützung des Katalysators ist es vorteilhaft, wenn im Rauchgas/Rohgas der Schwefelsäureproduktion der O₂-Bedarf mit reinem O₂ gedeckt wird. Statt der Einführug von Luft wird über einen eigenen Anschluß reiner Sauerstoff direkt vor der Katalyseeinheit eingeführt, wodurch das Gebläse vorteilhaft bis in den Ofen hinein wirksam ist und auch höhere Gasbelastungen im Ofen vorteilhaft verkraftbar sind.

Ein Ausschleusen von Metallen und der Alkalien wird dann möglich, wenn der mit Alkalichlorid und Alkalisulfat angereicherte Staub auch durch getrennte Behandlung unter Ausnutzung des paramagnetischen Effektes in Metalle, Alkalien und neutralmineralische Stoffe getrennt und unter Ausschleusung der Alkalien und Metalle in den Drehrohrofen zurückgeführt wird. Die fraktionierte Trennung und Ausnutzung des paramagnetischen Effektes kann ggf. auch auf die übrigen Stäube ausgedehnt werden und führt zu einer vorteilhaft gleichmäßigen Trennung und damit auch dazu, daß diese Produkte entsprechend wieder erneut zum Einsatz gebracht werden können. Die problematischen Alkaliene und Metalle werden ausgeschleust.

Das Rauchgas verläßt den Drehrohrofen mit etwa 700 °C. Diese Restwärme im Rauchgas kann vorteilt genutzt werden, wobei die Erfindung hierzu vorsieht, daß die Rauchgaswärme zur Vermeidung einer Niedertemperaturkorrosion unter Einhaltung einer Endtemperatur von z. B. 250 °C zu elektrischer Energie veredelt wird. Eine entsprechende Isolierung schließt die Gefahr der Säurekondensation im nachfolgenden Elektrofilter aus, so daß der Rauchgasreinigungsprozeß dadurch keineswegs behindert wird. Die elektrische Energie, die auf diese Art und Weise erzeugt werden kann, trägt zur Deckung des Eigenbedarfes bei und ermöglicht bei Hereinnahme von erneuerbaren Energien wie Windkraft sogar je nach Größe des Betriebes den Verkauf entsprechender Energie, so daß damit die Wirtschaftlichkeit des gesamten Verfahrens vorteilhaft unterstützt werden kann.

Das schon erwähnte Absaugen des Rauchgases durch Einschleusen von Kühlgasen wird gemäß der Erfindung dadurch unterstützt, daß der Klinker am Auslauf über angesaugte Sekundärverbrennungsluft im Gegenstrom gekühlt wird. Diese Sekundärverbrennungsluft wird nach entsprechender Aufwärmung durch den Klinker in den Drehrohrofen geführt und bringt hier den schon weiter vorn erwähnten vorteilhaften Effekt der besseren und umfangreicheren Verbrennung von Reststoffen.

Umweltprobleme werden insbesondere auch dadurch behoben, daß das Rauchgasquenchwasser indirekt gekühlt und das Kühlwasser im Kreislauf geführt wird. Während bisher ausschließlich mit Flußwasser gekühlt wurde, erlaubt die indirekte Kühlung die Reduzierung des Kühlwasserbedarfes ein Minimum. Die im Rauchgas mitgeführte Wasserfeuchte steht als Kühlumlauf- und Abgabewasser zur Verfügung. Eine unzulässige Anreicherung von Verunreinigungen wird durch kontinuierliche Abschwämmung verhindert. Zusätzlich können durch Spülungen in gewissen Abständen mit Frischwasser Anreicherungen wirkungsvoll verhindert werden.

In Verfahrensabläufen entstehende geruchsintensive organische Absaugungen werden zweckmäßigerweise mit Primärluft zusammen dem Drehrohrofen aufgegeben. Denkbar ist auch die Aufgabe auf sogenannte Biofilter.

Zur Vermeidung des Staubes im gesamten Verfahren ist es vorteilhaft, wenn das vorher fluidisierte und homogenisierte Rohmehl vor der Aufgabe in den Drehrohrofen zu Preßlingen geformt wird. Vorteilhaft kommt es beim Prozeß dann durch die Preßlinge im Drehrohrofen zur Abreinigung der Ofenwandung, so daß der Doppeleffekt auch für andere ähnliche Prozeße vorteilhaft verwendet werden kann.

Zur Durchführung des Verfahrens dient eine Anlage, bei der der Zerkleinerungseinrichtung für die Rohmehlkomponenten und Ausgleichs- und Reaktionsstoffe Vereinzelungssilos vorgeordnet und daß auch für die verschiedenen Brennstoffkomponenten Einzeltanks und -silos vorgesehen und mit gesteuertem Auslauf ausgerüstet sind, daß die Zuleitungen für die flüssigen, gasförmigen und festen Brennstoffkomponenten von dem Brennerrohr Umspülungskanäle belassend umfaßt sind, wobei die Zuleitungen unter dem Festbrennstoffrohr verlaufen und in den Drehrohrofen austragen, daß der Rohmehleintrag und der Staubaustrag der Rauchgasaustrittskammer Dichtsysteme aufweisen und daß im Rauchgasstrom hinter der Rauchgasaustrittskammer ein Blasstrahlkühler angeordnet ist. Entsprechend der Ausbildung der Anlage können die einzelnen Rohmehlkomponenten und auch die Brennstoffkomponenten getrennt gelagert und dann so zusammengefahren werden, wie es der optimalen Verfahrensführung und Rezeptur entspricht. Dieses optimale Eingabegut wird dann im Drehrohrofen weiterverarbeitet, wobei dieses dadurch unterstützt wird, daß durch die gemeinsame Einführung der einzelnen Brennstoffkomponenten eine optimale Flammenbildung gewährleistet ist. Der Kombi-Brenner ist so ausgebildet, daß die Feststofflamme durch die Flammen der übrigen Komponenten gezielt unterstütz bzw. ergänzt wird. Der gezielte Unterdruck in der Rauchgasaustrittskammer wirkt sich durch den Blasstrahlkühler doppelt aus, wobei die Saugwirkung sich bis weit in den Drehrohrofen hinaus bemerkbar macht.

Eine entsprechend stabile Ausbildung des Brennerrohres ist dabei gegeben, indem die Zuleitungen über ein Mantelrohr verfügen, in dem neben dem Mediumrohr ein Gebläseluftrohr und/oder ein Zerstäubermediumrohr parallel zueinander verlaufend angeordnet sind. Die einzelnen Brennstoffkomponenten werden somit bis in den Drehrohrofen getrennt geführt und dort so aufgegeben, daß sie jeweils mit getrennter aber einander unterstützender Flamme verbrannt werden können. Dabei werden die einzelnen Brennstoffkomponenten im Mediumrohr bis in den Brenner geführt und vollständig und intensiv verbrannt, weil parallel oder gleichzeitig dazu Gebläseluft und ggf. ein Zerstäubermedium eingegeben wird. Als Zerstäubermedium kommt entweder Dampf oder auch Druckluft in Frage, wobei diese Materialien zu einer optimalen Zerstäubung bzw. Aufteilung der Brennstoffkomponente beitragen, wodurch wiederum die gesteuerte Verbrennung und vollständige Verbrennung erreicht wird.

Diese intensive Vermischung der einzelnen Komponenten mit der benötigten Luft und die entsprechende Aufteilung in möglichst kleine Tröpfchen oder Bestandteile wird insbesondere dadurch gesichert, daß die Mantelrohre der als Säureteerleitung, Altölleitung, Sauerstoffleitung, Lösemitteleitung, Anfallsäureleitung oder Viskoseölleitung dienenden Leitungen in eine Brennerdüse einmündend ausgebildet sind, wobei das Gebläseluftrohr und/oder das Zerstäubermediumrohr in einen den mittigen Mediumrohrausgang umhüllenden Austrittskanal einmünden, der von den Wandungen eines Drallkörpers und einer Injektorkappe gebildet ist und schräg auf die Mittellinie des Mediumrohres austrägt. Die einzelnen Leitungen liegen dabei rundum bzw. unterhalb des Festbrennstoffrohres, so daß die schon mehrfach erwähnte gezielte Unterstützung der Festbrennstoffflamme erreicht wird. Die einzelnen Baustoffkomponenten ergänzen sich bzw. unterstützen sich und unterstützen den Festbrennstoff, nicht nur durch ihre entsprechende Position rundum das Festbrennstoffrohr, sondern auch dadurch, daß die entsprechenden Produkte soweit zerstäubt ausgetragenen werden, daß die gezielte Flammenbildung auch wirklich erreicht wird.

Gemäß Verfahren und Anlage fällt rund 70 % des Staubes bereits in der Rauchgasaustrittskammer an. Er kann dann im heißen Zustand über einen Redler oder ein ähnliches Fördergerät sofort wieder über den Rohmehleintrag in den Drehrohrofen zurückgebracht werden. Von daher ist die bisher übliche Grobstaubkammer nicht mehr zwangsweise notwendig. Um sie aber für Bedarfsfälle nach wie vor zur Verfügung zu haben, sieht die Erfindung vor, daß eine die den Entstauber mitbildende Grobstaubkammer umgehende Bypaßleitung zum Abhitzekessel vorgesehen ist.

Ein optimales Eingabegut erhält man dadurch, daß das Rohmehl vorab getrocknet bzw. erwärmt wird, was dadurch möglich ist, daß die Steigleitung hinter der Rauchgasaustrittskammer eine Schleuse für Rohmehl aufweist und daß zwischen der Rauchgasaustrittskammer und dem Entstauber ein Zyklon angeordnet ist, der auf bzw. in den Rohmehleintrag übergebend ausgebildet ist. Weiter vorne ist bereits darauf hingewiesen worden, daß dadurch schwebende Bestandteile des Rauchgases eingebunden und mit dem Rohmehl wieder in den Drehrohrofen zurückgeführt werden können. Der Zyklon hinter der Rauchgasaustrittskammer führt zu einem entsprechenden Abscheideprozeß, wobei das mit klebrigen Bestandteilen behaftete Rohmehl dann über den Rohmehleintrag entsprechend vorgewärmt in den Ofen eingeführt wird.

Um die im Rauchgas vorhandene Wärmeenergie ausnutzen zu können, sieht die Erfindung vor, daß dem zum Entstauber gehörenden E-Filter ein Wärmetauscher bzw. Abhitzekessel vorgeordnet ist, dem ein Gebläse in der Leitung zum E-Filter und zum Blasstrahlkühler ein Rückführungsgebläse zugeordnet ist. Eine solche Zuordnung ist vorteilhaft möglich, weil der überhöhte Druckverlust über das Wärmeaustauschersystem durch das zusätzliche Gebläse hinter dem Abhitzekessel aufgefangen wird. Mit diesem technischen Zusatz wird vor allem die Energienutzungsbilanz entscheidend verbessert. Darüber hinaus bietet der Abhitzekessel die Voraussetzung für eine Energiestation, in der der Überschußdampf zu elektrischer Energie veredelt werden kann.

Der zum Einsatz kommende Abhitzekessel gibt die Voraussetzung für die Energiestation, in der der Überschußdampf zu elektrischer Energie veredelt werden kann. Hierzu sieht die Erfindung vor, daß dem Abhitzekessel dampfseitig eine Kondensatturbine zugeordnet ist. Dabei macht sich die Erfindung den Sachverhalt zu Nutze, daß durch die Abwärmenutzung des heißen Rauchgases aus dem Drehrohrofen eine Möglichkeit gegeben ist, ausreichenden Dampf sowohl für den Eigenbedarf wie auch durch die Umwandlung elektrischer Energien ausreichender Mengen zur Verfügung zu stellen. Dabei wird der Dampf, der den Abhitzekessel verläßt über den Überhitzer auf eine Temperatur von rund 350 °C gebracht, so daß über die Kondensatturbine entsprechend Strom erzeugt werden kann.

Der Drehrohrofen wird mit den verschiedensten Brennstoffen befeuert, worauf ausführlich eingegangen worden ist, wobei wegen der Schwefelsäureherstellung allerdings verschiedene Parameter eingehalten werden müssen. Insbesondere dürfen keine unzulässigen Schadstoffgehalte im Rauchgas enthalten sein, insbesondere kein Schwefelwasserstoff u. ä. Dies vermeidet man gemäß der Erfindung dadurch, daß in der Rauchgasleitung hinter dem Elektrofilter ein Edelmetallkatalysator auf keramischem Monolithträger, vorzugsweise in einem Bypaß, angeordnet ist. Dabei macht sich die Erfindung zu Nutze, daß hinter dem Elektrofilter ein geeignetes Temperaturniveau zur Verfügung steht und daß insbesondere auch störende Staubgehalte nicht mehr vorhanden sind. Eine zweckmäßige Austauschmöglichkeit des Katalysators wird dadurch gegeben, daß er in einem Bypaß angeordnet ist, wobei sich eine solche im Bypaß angeordnete Katalysatorwabe insbesondere auch für Versuche optimal eignet, da dann ein Austausch für bestimmte Zeitbereich problemlos möglich wird.

Im Rahmen des Umweltschutzes muß mit Kühlwasser schonend umgegangen werden. Das bisher zum Einsatz kommende Flußwasser darf daher wenn überhaupt nur noch in geringen Mengen zum Einsatz kommen. Um dieser grundsätzlichen Forderung zu genügen, sieht der erfindungsgemäße Vorschlag vor, daß die Kühl- und Waschkolonne des Kühlturmes der eine Verbindungsleitung zum Leerturm mit eigenem Indirektkühlkreis aufweist, über eine Ringleitung, die an einen Wärmetauscher angeschlossen ist, mit Kühlwasser versorgt ist, wobei die Ringleitung über einen Frischwasseranschluß verfügt. Aufgrund des SO₂-Gehaltes muß das hier anfallende Wasser als Sauerwasser bezeichnet werden, wobei durch die indirekte Kühlung nur geringe Abwassermengen noch anfallen, die aus der vom Rauchgas mitgeführten Wasserfeuchte herrühren. Hierbei können störende Anreicherungen von Verunreinigungen aus dem Elektrofilterschlupf vermieden werden, indem in regelmäßigen Abständen Spülungen mit Frischwasser vorgenommen werden, wozu der Frischwasseranschluß dient.

Das Sauerwasser, das den Kühlturm bzw. den Leerturm verläßt, wird auf zweckmäßigeweise vom SO₂-Gehalt befreit, d. h. entgast, indem in die Abwasserleitung des Leerturms der Ausblaseturm geschaltet ist, der aus Edelstahl oder geeignetem Kunststoff besteht und/oder dessen Einbauten aus entsprechenden Materialien bestehen. Ein solcher Ausblaseturm verfügt über geringe Abmessungen und über hohe Standzeiten, weil entsprechend beständiges Material zum Einsatz kommt. Insgesamt wird die Restkontamination des Abwassers stark herabgesetzt, was gleichzeitig auch eine Minimierung der Arbeitsplatz- und Umweltbelastung sowie eine Reduzierung der Rückstandsmenge und des Chemikalienverbrauches in der Abwasseraufbereitung mit sich bringt. Das den Ausblaseturm verlassende Abwasser sollte zweckmäßig weiterbehandelt werden, wobei der Ablauf des Ausblaseturms mit einer 3stufigen Rührkesselkaskade und einer Kammerfilterpresse oder Spezialelektrolyse-Anlage mit getrennter Abscheidung und Gewinnung der Metalle verbunden ist. Insbesondere über die Spezialelektrolyse-Anlage ist die Möglichkeit gegeben, die unterschiedliche anfallenden Metalle getrennt abzuscheiden und hereinzugewinnen, so daß sie wieder zur Verhüttung zur Verfügung stehen.

Das erhaltene Endprodukt Schwefelsäure und Oleum wird zweckmäßig und umweltsicher gelagert, da die Behälter und Tanks für Schwefelsäure und Oleum in einer Auffangwanne mit kontrollierbarem Behälterboden angeordnet und mit einer Absaugung versehen sind und daß auch für Verladung und Zwischenlagerung Verladeauffangtasten installiert werden. Mit Hilfe einer entsprechenden Ausbildung der Anlage kann eine Umweltgefährdung ausgeschlossen werden, wobei insbesondere durch den kontrollierbaren Behälterboden eventuelle Lecks schnell feststellbar und behebbar sind. Bei derartiger Ausbildung können ausreichend große Tanklager gebaut und verwendet werden wobei sowohl flüssige wie gasförmige Austragsprodukte wieder aufgefangen und damit von der Umwelt ferngehalten werdne können.

Die Erfindung zeichnet sich insbesondere dadurch aus, daß ein Verfahren und eine Anlage zur Verfügung gestellt werden können, die eine wesentliche Verbesserung des Müller-Kühne-Verfahrens garantieren, wobei dies sowohl die Verfahrensführung und Verfahrenssicherheit wie auch die Wirtschaftlichkeit betrifft. Damit ist es möglich, weitere Reststoffe dem Rohmehl zuzugeben, wie auch unterschiedlichste Brennstoffkomponenten zum Einsatz zu bringen, so daß damit die weiter vorne erwähnte Schonung von Ressourcen einerseits und von Deponieraum andererseits mit der notwendigen Sicherheit erreicht werden können. Vorteilhaft ist dabei insbesondere, daß von der Energieseite her ein weitgehender autarker Betrieb möglich wird, der darüber hinaus Umweltbelastungen ausschließt.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein vereinfachtes Schema einer gesamten Anlage zur Herstellung von Zement und H₂SO₄ nach dem Müller-Kühne-Verfahren,
- Fig. 2: einen Längsschnitt durch einen Drehrohrofen,
- Fig. 3: eine Draufsicht auf ein Freilager,
- Fig. 4: einen Schnitt durch das Drehrohr im Bereich des Brennstoffeintrages,
- Fig. 5: einen Querschnitt durch das Brennerrohr,
- Fig. 6: einen Schnitt des Flüssigbrenners selbst,
- Fig. 7: die dem Drehrohrofen rauchgasseitig nachgeschalteten Anlagenteile mit Rohmehlvorwärmung,
- Fig. 8: den Bereich gemäß Fig. 7 mit zwischengeschalteter Grobstaubkammer,
- Fig. 9: den Bereich nach Fig. 7 und Fig. 8 für den Unterdruckbetrieb ausgebildet,
- Fig. 10: einen für die Behandlung der Feinstäube geeigneten Magnetscheider
- Fig. 11: den Kühl- und den Leerturm mit Kühlwasserführung,
- Fig. 12: den Ausblasturm in vereinfachter Darstellung
- Fig. 13: ein Schema mit Einrichtung zur Einführung von Sekundärverbrennungsluft und von Kühlgas,
- Fig. 14: eine vergrößerte Wiedergabe des Bereiches der Einspülung von Kühlgas und
- Fig. 15: eine weitere Variante dieses Bereiches, der vor allem in Fig. 14 wiedergegeben ist.

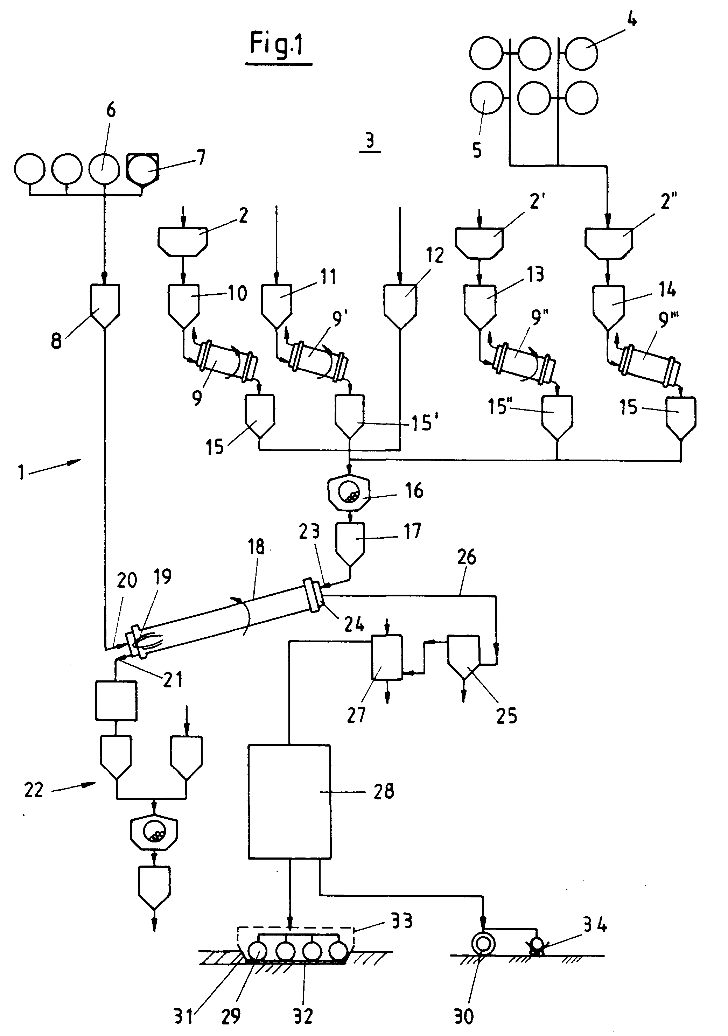

Fig. 1 zeigt das Schema einer Anlage, die nach dem Müller-Kühne-Verfahren arbeitet und zur Erzeugung von Zement und H₂SO₄ sowie Oleum dient. Der Zerkleinerungseinrichtung für das Zerkleiner Rohmehlkomponenten ist ein ausreichend großer Lagerplatz 3 mit einer Vielzahl von Vereinzelungssilos 4, 5 vorgeschaltet. Hierbei kann es sich um Reagips, um Abwasseraufbereitungsschlämme, um Havarieprodukte, Kraftwerksflugaschen, Sprühabsorbtionsprodukte, Wirbelschichtaschen, sowie Reste aus Müllerverbrennungsanlagen wie unter anderem Flugstäube oder Schwarzkalk, Altkatalysatoren, Sande, Porzellane, Pyrolyserückstände, Kalkschlamm, Gipsschlamm, Fellschlämme, Bauschutt und kontaminierte Böden, Mineralfasern incl. Aspest, Gießereiabfälle, Sandfang, Strahlsand, Straßenkehrricht, Klärschlamm, Papierschlamm, Hafenschlick o. ä. handeln.

Auch die verschiedenen als Brennstoffe zum Einsatz kommenden Komponenten werden in Tanks 6 bzw. Silos 7 vorgehalten und dann nach entsprechender Konditionierung über ein Zwischensilo 8 dem Prozeß zugeführt. Neben Braunkohlenstaub handelt es sich dabei um Säure-Teer, Altöl, Lösemittel, Anfallsäure, Viskoseöl sowie auch letztlich um Sauerstoff u. ä. gasförmige Produkte.

Die Rohmehlkomponenten dagegen werden beispielsweise in Form des Sandes aus dem Zwischensilo 10 einer Trockentrommel 9 zugeführt, um dann entsprechend konditioniert zu werden. Mit 11 ist das Sand und Abbrand enthaltende Zwischensilo, mit 12 das Koks enthaltende Zwischensilo, mit 13 das Anhydrit enthaltende Zwischensilo und mit 14 das weitere Rohmehlkomponenten aufnehmende Zwischensilo bezeichnet. Nach Durchlauf der Trockentrommel 9, 9', 9 ", 9''' wird das entsprechend vorbereitete Rohmehl in einem Rohmehlsilo 15 vorgehalten, um bei Bedarf und nach Rezept die Endzerkleinerungseinrichtung 16 zu durchlaufen, wobei sowohl eine weitere Zerkleinerung wie auch Mischung vorgenommen wird. Gespeichert wird das dann fertige Rohmehl im Fertigmehlsilo 17.

Das entsprechende Fertigmehl wird nach der Darstellung gemäß Fig. 1 dem Drehrohrofen 18 im Gegenstrom zum Brennstoff zugeführt, der über das Brennerrohr 20 und den Brenner 19 in den Drehrohrofen 18 gelangt.

Der erzeugte Klinker wird über den Klineraustrag 21 abgezogen und dann in der Zementaufbereitung 22 soweit aufbereitet, daß er als Fertigprodukt verkauft werden kann.

Das im Fertigmehlsilo 17 vorgehaltene Rohmehl wird über den Rohmehleintrag 23 durch die Rauchgasaustrittskammer 24 hindurch in den Drehrohrofen 18 gegeben. Das Rauchgas verläßt die Rauchgasaustrittskammer 24 über die Rauchgasleitung 26 und gelangt über den Entstauber 25 und die Rauchgaswäsche 27 zur H₂SO₄-Fabrik 28.

Die Endprodukte H₂SO₄ und Oleum werden in Behältern 29 und Tanks 30 vorgehalten, wobei diese Behältnisse in einer großen Auffangwanne 31 gelagert sind. Die Auffangwanne 31 weist einen Behälterboden 32 auf, der eine laufende Kontrolle ermöglicht, so daß ein Austritt von H₂SO₄ und Oleum in die Umgebung ausgeschlossen ist.

Die Auffangwanne 31 ist durch eine Überdachung abgesichert, wo eine Absaugung 33 dafür sorgt, daß auch Abgase nicht in die Umgebung gelangen können. Auch die einzelnen Verladestationen sind mit einer Verladeauffangtasse 34 versehen, um auf diese Art und Weise eine optimale Absicherung der Umwelt zu gewährleisten.

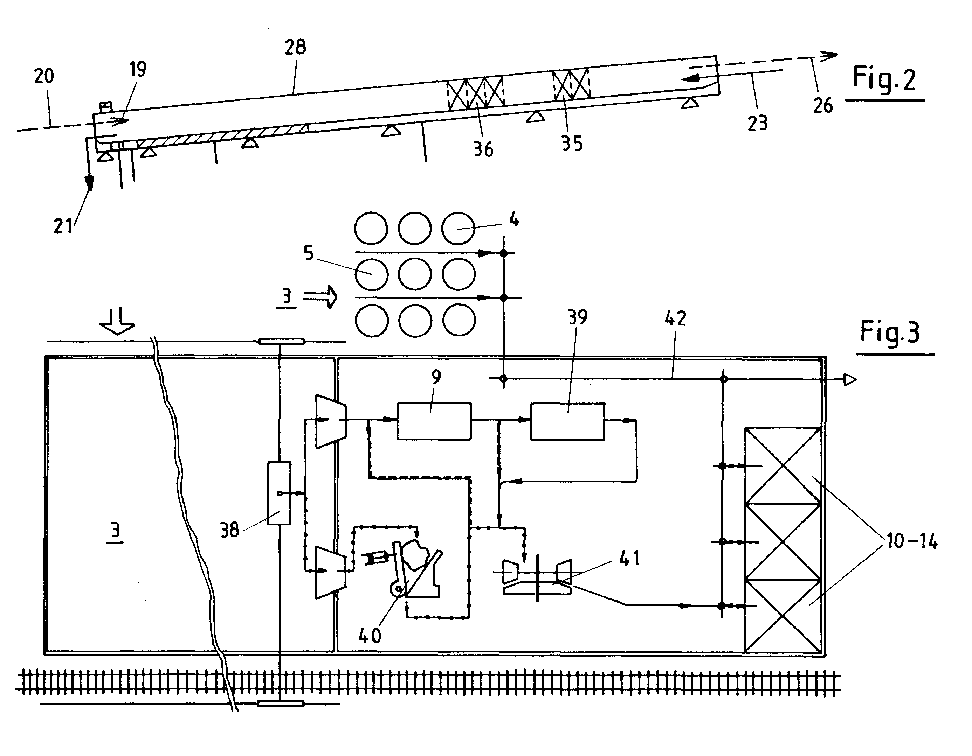

Fig. 2 zeigt einen Schnitt durch den schrägstehenden Drehrohrofen 18, wobei mit 35 und 36 die beiden Reaktionszonen bezeichnet sind, in denen die Umwandlung bzw. Spaltung des Calciumsulfats bzw. Calciumssulfits erfolgt. Deutlich wird bei der Darstellung nach Fig. 2, daß die Eingabe des Rohmehls über den Rohmehleintrag 23 entgegen der Flammenführung des Brennstoffes erfolgt.

Fig. 3 zeigt noch einmal eine Draufsicht auf einen Lagerplatz bzw. ein Freilager 3 mit unterteilten Boxen, wobei hier die Anlieferung der einzelnen Produkte beispielsweise über eine Bahn oder LKW erfolgt. Eine Weiterführung erfolgt über Redler 42. Die Rohmehlkomponenten als stückiges, körniges oder pulveriges Gut werden vom Freilager 3 beispielsweise über einen Krahn 38 aufgenommen und soweit erforderlich (Stückgut) der Zerkleinerung in Form eines Backenbrechers 40 und einer Mühle 41 zugeführt oder aber über eine Trockentrommel 9 und ggf. eine nachfolgende Pyrolyse 39 soweit vorbereitet, daß das dann anfallende Produkt wiederum als Rohmehl den einzelnen Zwischensilos 4, 5 und 10 bis 14 aufgegeben werden. Bezüglich der weiteren Verwendung wird auf Fig. 1 verwiesen.

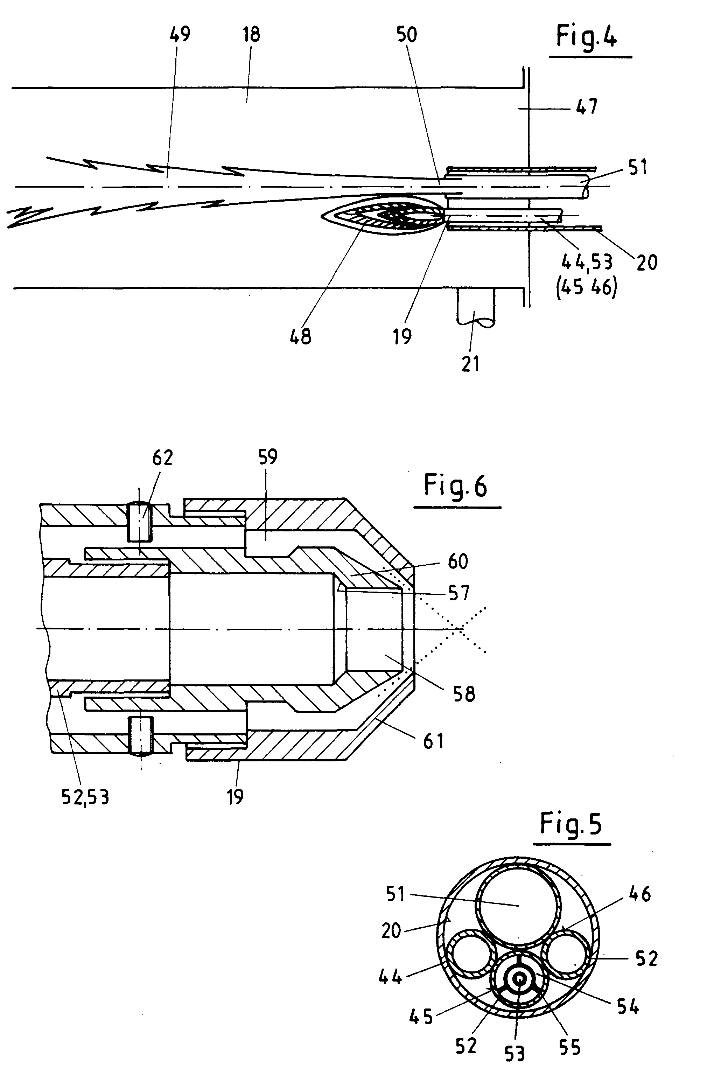

Fig. 4 zeigt den Drehrohrofen 18 im Schnitt auf der Brennstoffseite. Die verschiedenen Zuleitung 44, 45, 46 werden vom Brennerrohr 20 umgeben bis in den Drehrohrofen 18 geführt. Sie treten im Abstand zur Rückwand 47 des Drehrohrofens 18 aus, wobei sie ungefähr in der gleichen Höhe enden, während die Zuleitungen 44, 45, 46 über einen Brenner 19 verfügen, endet das Festbrennstoffrohr 51 in der Regel ohne einen solchen Einsatz. Die mit 49 bezeichnete Flamme ist eine Holzspäne- bzw. Sägemehlflamme, die durch Impulskräfte und Feuchteeinfluß weit in den Drehrohrofen 18 austrägt und wird durch die Mediumflamme 48 bzw. entsprechend viele Flammen unterstützt. Der Austrag des Sägemehls ist mit 50 bezeichnet.

Die Zuleitungen 44, 45, 46, hier für Säureharz, Lösungsmittel und für Anfallsäure weisen ein Mantelrohr 52 auf, das das Mediumrohr 53, ein Gebläsluftrohr 54 und ein Zerstäubermediumrohr 55 aufweist. Entsprechendes verdeutlicht Fig. 5. Fig. 5 zeigt auch, daß diese einzelnen Mantelrohre 52 bzw. Zuleitungen 44, 45, 46 und auch das Festbrennstoffrohr 51 innerhalb des Brennerrohres 20 Hohlräume belassend angeordnet sind, so daß sich Umspülungskanäle ergeben, die für die entsprechende Kühlung sorgen und die darüber hinaus die Möglichkeit geben, zusätzlich Verbrennungsluft in den Bereich der Brennerdüsen 57 bzw. der Brenner 19 zu bringen.

Eine entsprechende Brennerdüse 57 zeigt Fig. 6, wobei hier ein Schnitt durch diese Brennerdüse gezeigt ist. Die Brennerdüse 57 bildet das vordere Ende des Brenners 19, wobei der Mediumrohrausgang 58 durch einen Austrittskanal 59 ringförmig umgeben ist. Dieser Austrittskanal 59 wird von einem Drallkörper 60 und einer Injektorkappe 61 gebildet, so daß ein Luft- oder Mediumstrom erzeugt wird, der den dem Mediumrohrausgang 58 verlassenden Mediumstrahl so fein aufspaltet, daß sich ein vorteilhaft für die Verbrennung geeigneter Mediumstrom ergibt. Die Brennerdüse 57 ist über die Halteschrauben 62 mit dem Mantelrohr 52 bzw. dem Mediumrohr 53 verbunden.

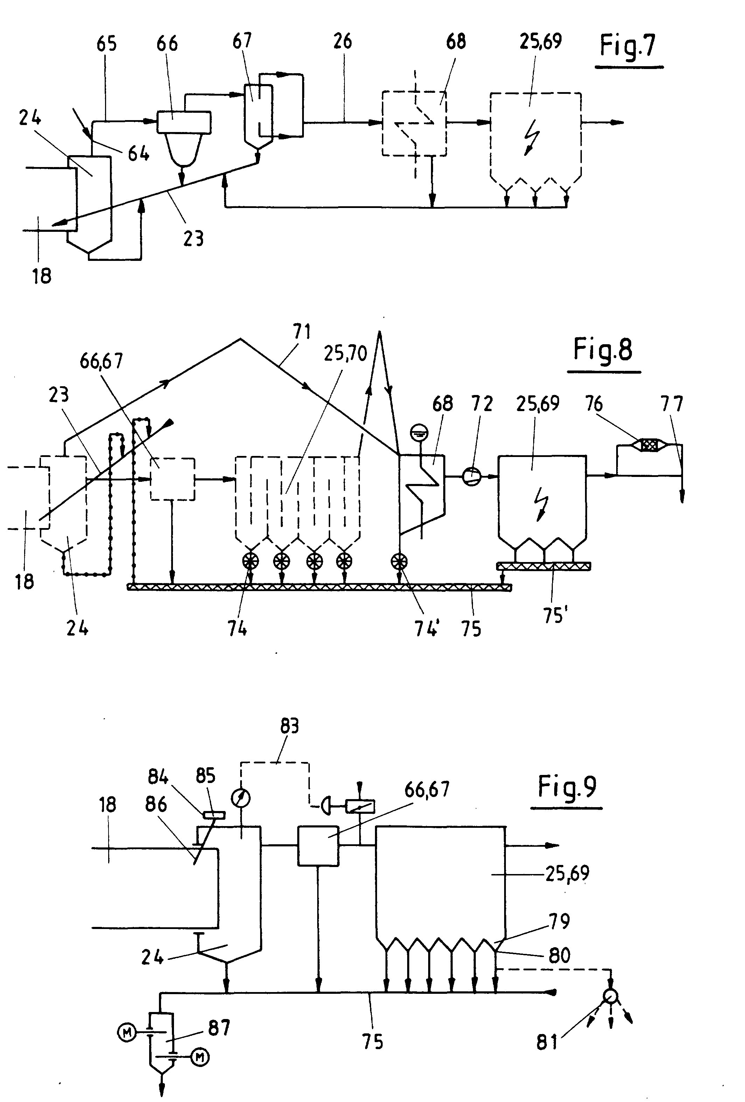

Fig. 7 zeigt das Drehrohrofenende mit der Rauchgasaustrittskammer 24. Das Rauchgas verläßt die Rauchgasaustrittskammer 24 am oberen Ende über die Steigleitung 65. In dieser Steigleitung 65 ist eine Schleuse 64 für das kalte Rohmehl vorgesehen. Dieses Rohmehl wird über die Steigleitung 65 mitgerissen und dann im Zyklon 66 bzw. dem nachfolgenden Hochleistungszyklon 67 abgeschieden und auf den Rohmehleintrag 23 übergeben. Auch das bodenseitig der Rauchgasaustrittskammer 24 abgezogene warme Rohmehl wird entsprechend auf kurzem Wege dem Rohmehleintrag 23 zugeführt.

Über die Rauchgasleitung 26 wird das heiße Rauchgas dann über einen Abhitzekessel 68 geführt und schließlich im Elektrofilter 69 von weiterem Staub befreit. Auch der hier abgesetzte Staub wird dem Rohmehleintrag 23 zugeführt.

Nach Fig. 8 dient zur Rückführung des abgeschiedenen Staubes ein geschlossener Schneckenförderer 75, wobei sowohl die Austräge der Grobstaubkammer 70 wie auch des Abhitzekessels 68 und des Elektrofilters 69 über Staubauslässe 74, 74' verfügen, so daß hier ein entsprechender Unterdruckbetrieb, der in Fig. 9 noch weiter erläutert ist, möglich wird.

Auf die Darstellung der Schleuse 64 ist hier verzichtet. Dargestellt ist hier, daß die Grobstaubkammer 70 über eine Bypaßleitung 71 umgangen werden kann, wobei für den Ausgleich des Druckverlustes ein Gebläse 72 hinter dem Abhitzekessel 68 angeordnet ist.

Zur Verhinderung unzulässiger Schadstoffgehalte im Rauchgas ist hinter dem Elektrofilter 69 eine Katalysatorwabe bzw. ein Katalysator 76 vorgesehen, der hier in einen Bypaß 77 geschaltet ist, um den Edelmetallkatalysator ggf. umgehen zu können.

Auf Fig. 9 wurde weiter vorne bereits hingewiesen. Hier geht es um die Darstellung des möglichen Unterdruckbetriebes, wozu hier auch eine Staubablaufschleuse 87 vorgesehen ist. Auch hier ist auf eine Vorwärmung des Rohmehls zunächst einmal verzichtet bzw. auf die Darstellung einer solchen Rohmehlvorwärmung.

Das Elektrofilter 69 verfügt hier im Bereich der letzten Kammer 79 über ein Schleuse 80, in die ein Magnetschalter 81 angeschlossen werden kann, der weiter hinten noch näher erläutert wird.

Außerdem zeigt Fig. 9 eine außerhalb des Unterdruckbereiches 83 angeordnete Rauchgasmeßeinrichtung 84. Der Analsysenkopf 85 der Rauchgasmeßeinrichtung 84 befindet sich außerhalb der Rauchgasaustrittskammer 24, während die Meßsonde 86 bis in den Drehrohrofen 18 hineinreichend ausgebildet ist.

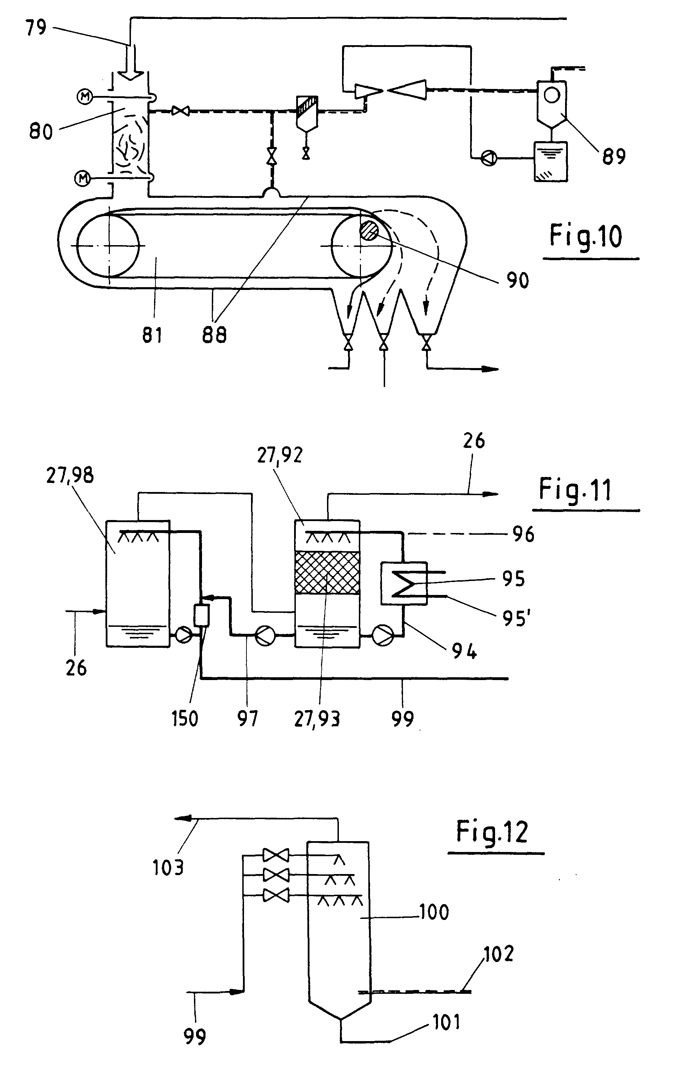

In Fig. 10 ist wie schon erwähnt eine besondere Ausbildung eines Magnetscheiders 81 wiedergegeben, wobei der in ein dichtes Gehäuse 88 eingeschlossene Magnetschalter 81 mit seinem Dauermagnet 90 an einen Vakuumerzeuger 89 angeschlossen ist. Dadurch kann das gesamte Gehäuse bzw. der gesamte Magnetscheider 81 im Vakuum betrieben werden, so daß entsprechend feine Stäube unter Ausnutzung des paramagnetischen Effektes in Metalle, Alkalien und neutralmineralische Stoffe getrennt werden können. Sie fallen in den einzelnen Trichtern an und können entsprechend ausgeschleust werden, ohne das System zu beeinträchtigen. Mit 80 ist die entsprechende Schleuse bezeichnet, die den Magnetscheider 81 von dem Förder bzw. der letzten Kammer 79 des Elektrofilters 69 trennt.

Die Figuren 11 und 12 verdeutlichen die indirekte Kühlung des für den Kühlturm 92 benötigten Kühlwassers. Dadurch kann der Bedarf an Frischwasser erheblich reduziert werden. Der mit den Kühl- und Waschkolonnen 93 ausgerüstete Kühlturm 92 wird entsprechend über eine Ringleitung 94 umgewälzt, in die ein Wärmetauscher 95 geschaltet ist. Zusätzlich verfügt die Ringleitung 94 über einen Frischwasseranschluß 96 (direkte Kühlung), um im Bedarfsfall eine Anreicherung von Verunreinigungen zu verhindern bzw. auszugleichen. Die Wanne wird über den Kühlkreis 95' zum Rückkühlwerk geführt (indirekte Kühlung).

Der Kühlturm 92 ist über die Verbindungsleitung 97 mit dem Leerturm 98 verbunden, wo das Rohgas zunächst einer Verdunstungskühlung unterzogen wird. Hierfür wird das dem Kühlturm 2 entnommene Überschußwasser genutzt. Der Überschußanteil wird über die Abwasserleitung 99 dem Ausblaseturm 100 zugeführt. Im Ausblaseturm 100 wird Quenchwasser verdüst und gelöstes SO₂ im Luftgegenstrom ausgetrieben. Der Lufteintrieb erfolgt über eine Klappe am Ausblaseturm und wird durch den Unterdruck, den die Gebläse erzeugen, ermöglicht. Die Zuführung der Ausblaseluft in den Rohgasstrom erfolgt zwischen Leerturm und Kühlturm. Mit 102 ist die Zuführungsluftleitung und mit 103 die Ausblaseluftleitung bezeichnet. Das ablaufende Sauerwasser verläßt den Ausblaseturm 100 über die Ablaufleitung 101. Das Sauerwasser wird dann in der hier nicht dargestellten Abwasseraufbereitung soweit weiterbehandelt und zwar in einer 3stufigen Rührkesselkaskade, so daß anschließend wiederverwendbarer Filterkuchen einerseits und entsprechendes abzuführendes Wasser übrig bleibt.

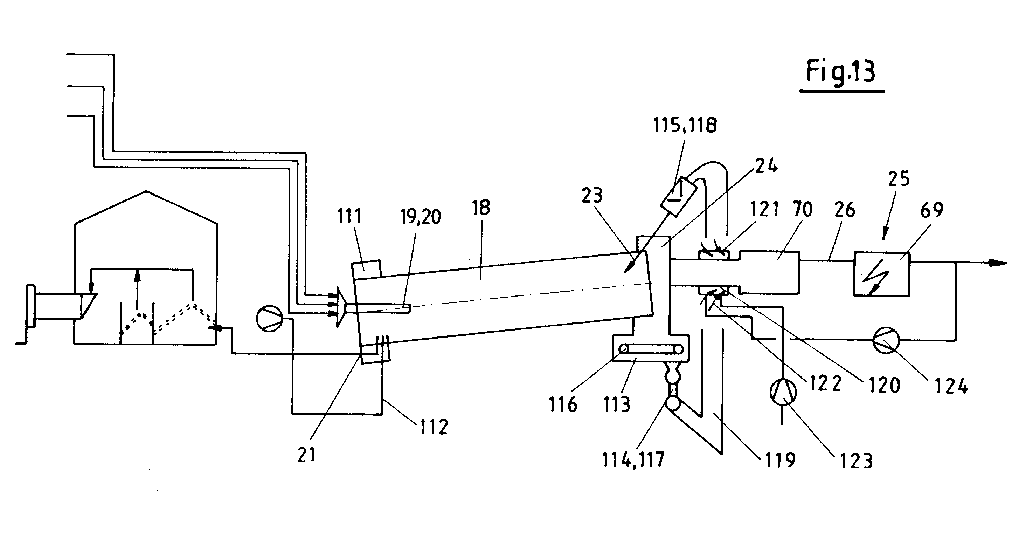

Das Rohmehl fließt bisher gravimetrisch aus einem Ofensilo, das in Fig. 13 nicht wiedergegeben ist, über ein schräges Aufgaberohr in die kalte Ofenseite des Drehrohrofens 18. Durch die Wälz- und Überrollbewegung des Rohmehls werden ca. 16 % als Staub ausgetragen und hauptsächlich über Schwerkraftabscheidesysteme wiedergewonnen und über Redlersysteme in den Rohmehlaufbereitungs- und -lagerbereich gefördert und dort dem Rohmehl wieder als Auffüllmenge zugegeben. Um fraktionsungleiche Abstaubungsabreicherung im Drehrohr und eine umständliche Wiederzuführung zu vermeiden, andererseits aber den Bereich des Ofenkopfes und damit der Rauchgasaustrittskammer 24 dicht zu halten, sind Dichtsysteme 114, 115 sowie 117 und 118 in Form von zweifach bzw. Doppelpendelklappen vorgesehen. Über den Austragskrazer 116 wird dabei das in der Rauchgasaustrittskammer 24 anfallende Material dem Becherwerk 119 bzw. Redlersystem übergeben und dann über den Rohmehleintrag 23 in den Drehrohrofen 18 zurückgefördert.

Durch diese Absicherung der Rauchgasaustrittskammer 24 und den nachgeschalteten Blasstrahlkühler 120 mit Düsen 121, 122 ist es möglich den gesamten Prozeß zu begünstigen. An den bisher vorhandenen difusen Falschluftquellen fallen Alkalienverbindungen bevorzugt aus und bilden unter anderem Klumpen, Knollen und Verbackungen, die nun vermieden werden, so daß menschenunwürdige Stocherarbeiten jeden Tag entfallen. Dazu tragen auch die Vermeidung von schrägen Wänden im Heißgasbereich sehr bei, sowie die schon erwähnte schockartige Bedüsung des Rauchgases mit Kaltgas (z. B. Luft) über die schon erwähnten Düsen 121, 122 vom Mantel her, ggf. unterstützt von einer Zntraldüse mit Sperrvorhangwirkung. Diese Brausedüse ist zwischen Übergangsrohr zwischen Ofenkopf, d. h. Rauchgasaustrittskammer 24 und Grobstaubkammer 70 angeordnet. Die Kühlwirkung ist so eingerichtet, daß eine Kältezone hinter den Düsen 121, 122 von etwa 600 °C entsteht. Mit der O₂ angereicherten Gaszuspeisung werden auch mögliche überhöhte Gehalte an CO aufoxidiert zu CO₂, das gleiche gilt für Schwefel u. a. und Unverbranntes, so daß eine zusätzliche Prozeßabsicherung in Form einer micronalen Nachverbrennung vorteilhaft erreicht ist. Als Kühlgas kann sowohl Luft als auch abgekühltes und rückgeführtes Rauchgas verwendet werden. Je nach Gastemperaturzustand verändern sich die Treibgasmengen und in Verbindung mit den Blasdrücken die Aufrechterhaltung der dazugehörigen Saugwirkung. Bezogen auf eine Rauchgasstrom von 18.000 Nm³/h gelten etwa folgende Zahlen:

| | | | |
|---|---|---|---|
| 20 °C | 2.000 Nm³/h | Luft | 6 bar Druck, |
| 250 °C | 6.000 Nm³/h | Gas, Rauchgas | 0,5 bar Druck und |
| 350 °C | 8.000 Nm³/h | Rauchgas | 0,25 bar Druck. |

Im tiefen Temperaturbereich kann Luft genommen werden, weil diese Mengen ungefähr dem heutigen Falschlufteinbruch entsprechend diese verdrängen und sehr leicht vom Saugzuggebläse der gesamten Anlage abgefördert werden kann. Bei den großen Mengen und höheren Temperaturen handelt es sich um Rauchgas, das rückgeführt wird. Hier ist man weniger an eine Begrenzung gebunden, solange die Rauchgastransportwege dies verkraften. Eine besondere Bewandnis hat es mit dem Blasdruck und der dadurch erzeugten Unterdruckwirkung, die nur über einen vorher dichtgemachten Ofenkopf ihre Wirksamkeit entfalten kann. Damit wird eine Sogwirkung erreicht, die bis in den Ofen am Brennerstand bzw. am Klinkeraustritt 21 wirkt.

Der Drehrohrofen 18 arbeitet gemäß Fig. 13 mit einem Planetenkühler 111 am Klinkerauslauf 21. Dies bedeutet, daß die Sekundärverbrennungsluft, die über den Planetenkühler oder die Planetenkühler 111 über die Sekundärluftzuleitung 112 angesaugt wird, gleichzeitig den auslaufenden Klinker im Gegenstrom kühlt.

Mit 113 ist übrigens der Staubaustrag an der Rauchgasaustrittskammer 24 bezeichnet, über den weiter vorne schon Erläuterungen abgegeben worden sind.

Mit Ersatz des Kohlenstaubsatzbrennstoff durch Abprodukte bzw. Reststoffe treten vermehrte Mengen H₂O im Rauchgasgemisch auf, wodurch fast eine Verdopplung des Rauchgasvolumenstromes entsteht. Dieses Wasserdampfkontingent drückt ständig die mehrfach benötigte Sekundärluft weg (Klinkerkühlung, Brennstoffumsetzung, Ofengastemperierung) und verursacht unangenehme Begleiterscheinungen, wie zu heißer Klinker, glühen der Planetenkühler 111, glühen bzw. zu heiße Klinkerbrennzone, zu heiße Flamme und unvollkommene Verbrennung, ggf. Förderung des Ofenansatzes in der Ofenmitte. Mit der Blasstrahlvorrichtung bzw. dem Blasstrahlkühler 120 ist aus ganz anderen Gründen hier gleichzeitig eine Förderhilfe geschaffen, indem sie vermehrt Rauchgas durchzieht und darüber hinaus noch die dringend benötigte Sekundärluft über die Planetenkühler 111 ansaugt. Über ein solches Betriebsorgan läßt sich dann die Fahrweise des Drehrohrofens 18 reproduzierbar einstellen.

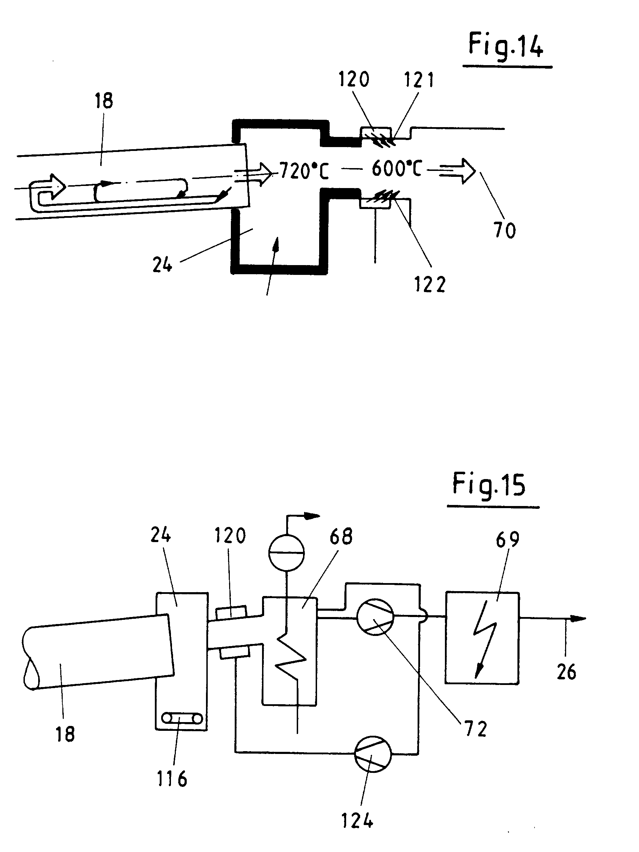

Mit Einführung des Wärmetauschers als Abhitzekessel zur Nutzung der Restwärme ist an den kühleren Heizflächen mit einem starken Niederschlag an Alkalien zu rechnen. Es könnte sein, daß sich die starken Ansätze durch das kesseleigene Reinigungssystem nicht mehr bewältigen lassen. Die Absaugung des Drehrohrofens 18 und die Hineinverpflanzung des Unterdruckes in das Drehrohr könnte das Saugzuggebläse hinter dem Abhitzekessel überfordern. Fig. 14 verdeutlicht, daß bis zur Brausedüse der Gasführungsraum isoliert gehalten wird, damit keine Alkali-Salze ausfallen. Nach der Kältedusche im Blasstrahlkühler ist die Klebephase der Salze überwunden und eine Gefährdung nicht mehr zu erwarten.

Zur Ausfällungskühlung der Alkalien müßte ein Teil des Rauchgases hinter dem Abhitzekessel wieder in die Brausedüse zurückgeführt und eingespeist werden. Damit erhält man wieder ungute Mengen an Alkalienstaub, aber nicht mehr in der klebefähigen Form, der dann im Abhitzekessel von alleine ausfällt. Anhaftungen können hier leicht entfernt werden. Eine entsprechend geschickte Schaltung zeigt Fig. 15, wobei der Abhitzekessel 68 quasi als Grobstaubkammer wirkt, dem hinter einem Hurriclon entsprechende Gebläse zugeordnet sind. Um die Gebläseleistung dabei gering zu halten, ist ein Rückführungsgebläse 124 vorgesehen und zwar ergänzend zum Gebläse 72, das einen Teil des Rauchgasstromes, wie schon erwähnt, dem Blasstrahlkühler 120 wieder zuführt. Damit wird der in Fig. 13 gezeigte Druckluftkompressor 123 zur Versorgung des Blasstrahlkühlers 120 überflüssig. Das Abzugsgebläse 72 (100 mmWS) erhält beispielsweise eine Leistung von 20.000 Nm³/h, während das Rückführungsgebläse (0,5 bar) z. B. auf 6.000 Nm³/h ausgelegt ist.

Alle genannten Merkmale, auch die den Zeichnungen allein zu entnehmenden, werden allein und in Kombination als erfindungswesentlich angesehen.

## Patentansprüche

1. Verfahren zur kombinierten Verwertung von Reststoffen, die bei der Herstellung von Zement und Schwefelsäure nach dem sogenannten Müller-Kühne-Verfahren mit dem Rohmehl dem Drehrohrofen in aufbereiteter Form aufgegeben und unter Zuhilfenahme von ebenfalls teilweise aus Reststoffen bestehendem, chemisch reaktiven Kohlenstoff bei über 700 °C mit dem Calciumsulfat gespalten werden, wobei das CaO dann bei über 1 200 °C in Gegenwart von SiO₂, Al₂O₃ und Fe₂O₃ zu Zement gebrannt und das SO₂-haltige Rauchgas von Staub befreit, gewaschen, mit Luft gemischt und zu SO₃ bzw. H₂SO₄ umgesetzt wird,
**dadurch gekennzeichnet**,
daß die Rohmehlkomponenten und die Brennstoffkomponenten einschließlich der einzusetzenden Reststoffe inclusive der zur Eliminierung zementuntypischer Komponenten benötigten Ausgleichs- und Reaktionsstoffe getrennt gelagert, konditioniert und dann entsprechend vorgegebener Rezeptur und über Probenahme und -auswertung überwacht eingebracht werden, daß die flüssigen und festen als Brennstoff einzusetzenden Reststoffe getrennt bis in den Drehrohrofen transportiert und dann mit einander unterstützender Flamme verbrannt werden und daß die Rauchgase unter Abdichtung des Ofenkopfes und der Rauchgasaustrittskammer durch Einspeisung von Kühlgas schockartig abgekühlt werden.

2. Verfahren nach Anspruch 1,
**dadurch gekennzeichnet**,
daß der Anhydrit-Anteil im Rohmehl zu 20 - 100 % durch Reststoffe ersetzt wird.

3. Verfahren nach Anspruch 1,
**dadurch gekennzeichnet**,
daß der anfallende, vorzugsweise am Ofenkopf anfallende Staub unter Wahrung der Abdichtung auf kurzem Weg in den Drehrohrofen zurückgefahren wird.

4. Verfahren nach Anspruch 1 bis Anspruch 3,
**dadurch gekennzeichnet**,
daß das Rauchgas nach Verlassen des Drehrohrofens mit Rohmehl beaufschlagt und dies erst dann und unter Zumischung des Staubes der Ofenaufgabe zugeführt wird.

5. Verfahren nach Anspruch 1,
**dadurch gekennzeichnet**,
daß die eingehenden Rohmehlkomponenten bzw. Reststoffe durch Probenahme analysiert, zwischengelagert, dosiert zugemischt und daß über Zwischenprobenahme und ggf. ergänzende Konditionierung und Zugabe von Korrekturen Anpassungen vorgenommen werden.

6. Verfahren nach Anspruch 1,
**dadurch gekennzeichnet**,
daß feuchte und/oder grobstückige und/oder mit Kohlenwasserstoffen verunreinigte, mineralische Einsatzstoffe vor der Lagerung soweit erforderlich zerkleinert, getrocknet und ggf. einer Pyrolyse unterzogen und gemahlen werden.

7. Verfahren nach Anspruch 1,
**dadurch gekennzeichnet**,
daß die Kohleeindüsung und/oder die Eindüsung des mit Kohlenwasserstoffen u. ä. getränkten Sägemehls und/oder die Schwefelsäureeindüsung unter gleichzeitiger Erzeugung eines von umgebenden Lanzen für Flüssigbrennstoffe erzeugten, umgebenden Brennmantels vorgenommen wird, wobei der Kohleanteil vorzugsweise ganz durch Kohlenwasserstoffe und/oder andere flüssige Reststoffe ersetzt wird.

8. Verfahren nach Anspruch 1,
**dadurch gekennzeichnet,**
daß ergänzend oder statt der Rohmehlkomponentenkorrektur eine Veränderung der Ofenfahrweise über die Drehzahl des Ofens und/oder die Brennstoff- und Sauerstoffzufuhr vorgenommen wird.

9. Verfahren nach Anspruch 1 - Anspruch 8,
**dadurch gekennzeichnet**,
daß am Ofenkopf bzw. der Rauchgasaustrittskammer und auch im noch staubenden Bereich einschließlich der Staubfördersysteme ein Unterdruck eingestellt und eingehalten wird.

10. Verfahren nach Anspruch 1,
**dadurch gekennzeichnet**,
daß die Primärluft zur Erhöhung des H₂SO₄-Einsatzes und des Rohmehleinsatzes im Drehrohrofen mit Sauerstoff angereichert wird.

11. Verfahren nach Anspruch 1,
**dadurch gekennzeichnet,**
daß im Rauchgas/Rohgas der Schwefelsäureproduktion der O₂-Bedarf mit reinem O₂ gedeckt wird.

12. Verfahren nach Anspruch 1,
dadurch gekennzeichnet,
daß der mit Alkalichlorid und Alkalisulfat angereicherte Staub auch durch getrennte Behandlung unter Ausnutzung des paramagnetischen Effektes in Metalle, Alkalien und neutralmineralische Stoffe getrennt und unter Ausschleusung der Alkalien und Metalle in den Drehrohrofen zurückgeführt wird.

13. Verfahren nach Anspruch 1,
**dadurch gekennzeichnet,**
daß die Rauchgaswärme zur Vermeidung einer Niedertemperaturkorrosion unter Einhaltung einer Endtemperatur von z. B. 250 °C zu elektrischer Energie veredelt wird.

14. Verfahren nach Anspruch 1,
**dadurch gekennzeichnet**,
daß der Klinker am Auslauf über angesaugte Sekundärverbrennungsluft im Gegenstrom gekühlt wird.

15. Verfahren nach Anspruch 1,
**dadurch gekennzeichnet**,
daß das Rauchgasquenchwasser indirekt gekühlt und im Kreislauf geführt wird.

16. Verfahren nach Anspruch 1,
**dadurch gekennzeichnet,**
daß geruchsintensive und/oder verunreinigte Absaugungen mit der Primärluft zusammen dem Drehrohrofen aufgegeben werden.

17. Verfahren nach Anspruch 1,
**dadurch gekennzeichnet**,
daß das vorher fluidisierte und homogenisierte Rohmehl vor der Aufgabe in den Drehrohrofen zu Preßlingen geformt wird.

18. Anlage zur Herstellung von Zement und Schwefelsäure nach dem sogenannten Müller-Kühne-Verfahren mit einer Zerkleinerungseinrichtung (2) für die Rohmehlkomponenten, Silos (7), Trockentrommeln (9), einer Endzerkleinerungseinrichtung (16), dem Rohmehlsilo (15), dem Drehrohrofen (18), dem Brenner (19) mit Brennerrohr (20), dem Klinkeraustrag (21) und der Zementaufbereitung (22), der Rauchgasaustrittskammer (24), dem Entstauber (25), der Rauchgaswäsche (27) und der H₂SO₄-Fabrik (28) und damit zur Durchführung des Verfahrens nach Anspruch 1 und/oder den Ansprüchen 2 bis 16,
**dadurch gekennzeichnet,**
daß der Zerkleinerungseinrichtung (2) für die Rohmehlkomponenten und Ausgleichs- und Reaktionsstoffe Vereinzelungssilos (4, 5) vorgeordnet und daß auch für die verschiedenen Brennstoffkomponenten Einzeltanks (6) und Silos (7) vorgesehen und mit gesteuertem Auslauf ausgerüstet sind, daß die Zuleitungen (44, 45, 46) für die flüssigen, gasförmigen und festen Brennstoffkomponenten von dem Brennerrohr (20) Umspülungskanäle belassend umfaßt sind, wobei die Zuleitungen unter dem Festbrennstoffrohr (51) verlaufen und in den Drehrohrofen (18) austragen, daß der Rohmehleintrag (23) und der Staubaustrag (113) der Rauchgasaustrittskammer (24) Dichtsysteme (114, 115) aufweisen und daß im Rauchgasstrom hinter der Rauchgasaustrittskammer (24) ein Blasstrahlkühler (120) angeordnet ist.

19. Anlage nach Anspruch 18,
**dadurch gekennzeichnet,**
daß die Zuleitungen (44, 45, 46) über ein Mantelrohr (52) verfügen, in dem neben dem Mediumrohr (53) ein Gebläseluftrohr (54) und/oder ein Zerstäubermediumrohr (55) parallel zueinander verlaufend angeordnet sind.

20. Anlage nach Anspruch 18 und Anspruch 19,
**dadurch gekennzeichnet,**
daß die Mantelrohre (52) der als Säureteerleitung (44), Altölleitung, Sauerstoffleitung, Lösemitteleitung (45), Anfallsäureleitung (46) oder Viskoseölleitung dienenden Leitungen in eine Brennerdüse (57) einmündend ausgebildet sind, wobei das Gebläseluftrohr (54) und/oder das Zerstäubermediumrohr (55) in einen den mittigen Mediumrohrausgang (58) umhüllenden Austrittskanal (59) einmünden, der von den Wandungen eines Drallkörpers (60) und einer Injektorkappe (61) gebildet ist und schräg auf die Mittellinie des Mediumrohres (53) austrägt.

21. Anlage nach Anspruch 18,
**dadurch gekennzeichnet,**
daß eine die den Entstauber (25) mitbildende Grobstaubkammer (70) umgehende Bypaßleitung (71) vorgesehen ist.

22. Anlage nach Anspruch 18,
**dadurch gekennzeichnet,**
daß die Steigleitung (65) hinter der Rauchgasaustrittskammer (24) eine Schleuse (64) für Rohmehl aufweist und daß zwischen der Rauchgasaustrittskammer (24) und dem Entstauber (67) ein Zyklon (66) angeordnet ist, der auf bzw. in den Rohmehleintrag (23) übergebend ausgebildet ist.

23. Anlage nach Anspruch 18,
**dadurch gekennzeichnet**,
daß dem zum Entstauber (25) gehörenden E-Filter (69) ein Wärmetauscher bzw. Abhitzekessel (68) vorgeordnet ist, dem ein Gebläse (72) in der Leitung zum E-Filter (69) und zum Blasstrahlkühler (120) ein Rückführungsgebläse (124) zugeordnet ist.

24. Anlage nach Anspruch 18,
**dadurch gekennzeichnet,**
daß dem Abhitzekessel (68) dampfseitig eine Kondensatturbine (108) zugeordnet ist.

25. Anlage nach Anspruch 18,
**dadurch gekennzeichnet,**
daß in der Rauchgasleitung (26) hinter dem Elektrofilter (69) ein Edelmetallkatalysator (76) auf keramischem Monolithträger, vorzugsweise in einem Bypaß (77), angeordnet ist.

26. Anlage nach Anspruch 18,
**dadurch gekennzeichnet,**
daß die Kühl- und Waschkolonne (93) des Kühlturmes (92), der eine Verbindungsleitung (97) zum Leerturm (98) mit eigenem Indirektkühlkreis aufweist, über eine Ringleitung (94), die an einen Wärmetauscher (95) angeschlossen ist, mit Kühlwasser (95') versorgt ist, wobei die Ringleitung (94) über einen Frischwasseranschluß (96) verfügt.

27. Anlage nach Anspruch 18,
**dadurch gekennzeichnet,**
daß in die Abwasserleitung (99) des Leerturms (98) der Ausblaseturm (100) geschaltet ist, der aus Edelstahl oder geeignetem Kunststoff besteht und/oder dessen Einbauten aus entsprechenden Materialien bestehen.

28. Anlage nach Anspruch 18,
**dadurch gekennzeichnet**,
daß der Ablauf (101) des Ausblaseturms (100) mit einer 3stufigen Rührkesselkaskade und einer Kammerfilterpresse oder Spezialelektrolyse-Anlage mit getrennter Ausscheidung und Gewinnung der Metalle verbunden ist.

29. Anlage nach Anspruch 18,
**dadurch gekennzeichnet,**
daß die Behälter (29) und Tanks (30) für Schwefelsäure und Oleum in einer Auffangwanne (31) mit kontrollierbarem Behälterboden (32) angeordnet und mit einer Absaugung (33) versehen sind und daß auch für Verladung und Zwischenlagerung Verladeauffangtassen (34) installiert sind.

## Claims

1. Process for the combined recycling of waste which is fed in reprocessed form with the untreated powder to the rotary kiln during the production of cement and sulphuric acid by the so-called Müller-Kühne process and are cleaved with the calcium sulphate with the aid of chemically reactive carbon, also partially consisting of waste, at a temperature above 700°C, the CaO then being calcined at over 1,200°C in the presence of SiO₂, Al₂O₃ and Fe₂O₃ to form cement and the SO₂-containing flue gas being freed from dust, washed, mixed with air and reacted to form SO₃ or H₂SO₄, characterised in that the untreated powder components and the fuel components including the waste to be used, inclusive of the compensating and reaction agents required to eliminate non-typical cement components are stored separately, conditioned and then, in accordance with a predetermined formulation and by means of sampling and sample evaluation are introduced with monitoring, in that the liquid and solid waste to be used as fuel are transported separately until they reach the rotary kiln and are then burnt by a mutual flame, and in that the flue gases are rapidly cooled by supplying cooling gas while sealing the kiln hood and the flue gas outlet chamber.

2. Process according to claim 1, characterised in that 20 to 100% of the anhydrite fraction in the untreated powder is replaced by waste.

3. Process according to claim 1, characterised in that the dust which accumulates, which preferably accumulates at the kiln hood, is transported back into the rotary kiln by a short route while maintaining the seal.

4. Process according to claim 1 to claim 3, characterised in that after leaving the rotary kiln the flue gas is loaded with untreated powder and only then is supplied to the kiln feed point while adding dust.

5. Process according to claim 1, characterised in that the entering untreated powder components or waste are analysed by sampling, stored temporarily, added while metering, and in that adjustments are made by means of intermediate sampling and optionally supplementary conditioning and addition of corrections.

6. Process according to claim 1, characterised in that moist and/or lumpy mineral feed materials and/or mineral feed materials contaminated by hydrocarbons are reduced in size in so far as this is necessary, dried and optionally subjected to pyrolysis and ground.

7. Process according to claim 1, characterised in that coal and/or sawdust saturated *inter alia* with hydrocarbons and/or sulphuric acid are fed in while simultaneously producing a surrounding flame jacket produced by peripheral lances for liquid fuels, the coal fraction preferably being completely replaced by hydrocarbons and/or other liquid waste.

8. Process according to claim 1, characterised in that a change is made to the operating characteristics of the kiln via the speed of the kiln and/or the supply of fuel and oxygen, which change is supplementary to or replaces the untreated powder component correction.

9. Process according to claim 1 to claim 8, characterised in that a partial vacuum is adjusted and maintained at the kiln hood or the flue gas outlet chamber and also in the region which still raises dust including the dust conveying systems.

10. Process according to claim 1, characterised in that the primary air is enriched with oxygen in order to increase the H₂SO₄ use and untreated powder use in the rotary kiln.

11. Process according to claim 1, characterised in that the O₂ requirement is satisfied by pure O₂ in the flue gas/crude gas for sulphuric acid production.

12. Process according to claim 1, characterised in that the dust enriched with alkali chloride and alkali sulphate is also separated by separate treatment by exploiting the paramagnetic effect in metals, alkalis and neutral mineral substances and returned to the rotary kiln with outward transfer of the alkalis and metals.

13. Process according to claim 1, characterised in that the flue gas heat is converted to electrical energy, while maintaining a final temperature of 250°C for example, in order to avoid low temperature corrosion.

14. Process according to claim 1, characterised in that the clinker at the outlet is cooled in a counter-current by secondary combustion air which has been drawn in.

15. Process according to claim 1, characterised in that the flue gas quench water is indirectly cooled and circulated.

16. Process according to claim 1, characterised in that pungent and/or contaminated extracted materials are fed to the rotary kiln together with the primary air.

17. Process according to claim 1, characterised in that previously fluidised and homogenised untreated powder is shaped into pressed parts prior to being fed into the rotary kiln.

18. Plant for producing cement and sulphuric acid by the so-called Müller-Kühne process with a size reduction device (2) for the untreated powder components, silos (7), rotary driers (9), a final size reduction device (16), the untreated powder silo (15), the rotary kiln (18), the burner (19) with the burner pipe (20), the clinker discharge (21) and the cement reprocessing (22), the flue gas outlet chamber (24), the dust separator (25), the flue gas washing system (27) and the H₂SO₄ plant (28) and therefore for carrying out the process according to claim 1 and/or claims 2 to 16, characterised in that separating silos (4, 5) are arranged upstream of the size reduction device (2) for the untreated powder components and compensating and reaction agents, and in that individual tanks (6) and silos (7) are also provided for the different fuel components and are equipped with controlled outlet, in that the feed lines (44, 45, 46) for the liquid, gaseous and solid fuel components of the burner tube (20) are kept surrounded by washing channels, the feed pipes extending beneath the solid fuel pipe (51) and discharging into the rotary kiln (18), in that the untreated powder filling (23) and the dust discharge (113) of the flue gas outlet chamber (24) have sealing systems (114, 115), and in that a blast jet cooler (120) is arranged in the flue gas stream downstream of the flue gas outlet chamber (24).

19. Plant according to claim 18, characterised in that the feed pipes (44, 45, 46) have a jacket pipe (52) in which in addition to the medium pipe (53) a blast air pipe (54) and/or an atomiser medium pipe (55) are arranged so as to extend parallel to one another.

20. Plant according to claim 18 and claim 19, characterised in that the jacket pipes (52) of the lines serving as acid tar line (44), waste oil line, oxygen line, solvent line (45), waste acid line (46) or viscous oil line are designed so as to discharge in a burner nozzle (57), the blast air pipe (54) and/or the atomiser medium pipe (55) discharging in an outlet duct (59) surrounding the central medium pipe outlet (58), which outlet duct is formed by the walls of a twisting element (60) and an injector cap (61) and discharges obliquely along the centre line of the medium pipe (53).

21. Plant according to claim 18, characterised in that a bypass line (71) bypassing the coarse dust chamber (70) forming the dust separator (25) is provided.

22. Plant according to claim 18, characterised in that the ascending pipeline (65) downstream of the flue gas outlet chamber (24) has a sluice (64) for untreated powder, and in that a cyclone (66) is arranged between the flue gas outlet chamber (24) and the dust separator (67), which cyclone is designed to transfer onto or into the untreated powder feed (23).

23. Plant according to claim 18, characterised in that a heat exchanger or waste heat boiler (68) is arranged upstream of the E-filter (69) pertaining to the dust separator (25), a fan (72) in the line to the E-filter (69) and a feedback fan (124) to the blast jet cooler (120) being associated with the waste heat boiler.

24. Plant according to claim 18, characterised in that a condensate turbine (108) is associated with the waste heat boiler (68) on the vapour side.

25. Plant according to claim 18, characterised in that a precious metal catalyst (76) on ceramic monolith support is arranged in the flue gas line (26) downstream of the electrofilter (69), preferably in a bypass (77).

26. Plant according to claim 18, characterised in that the cooling and washing columns (93) of the cooling tower (92), which has a connecting line (97) to the empty tower (98) with its own indirect cooling circuit, is supplied with cooling water (95') via a closed circular pipeline (94) which is connected to a heat exchanger (95), the closed circular pipeline (94) having a fresh water connection (96).

27. Plant according to claim 18, characterised in that the exhaust tower (100) is connected into the waste water line (99) of the empty tower (98), which exhaust tower consists of special steel or suitable plastics material and/or has fittings consisting of corresponding materials.

28. Plant according to claim 18, characterised in that the outlet (101) of the exhaust tower (100) is connected to a three-stage series of stirred tank reactors and a chamber filter press or special electrolysis plant with separate precipitation and production of the metals.

29. Plant according to claim 18, characterised in that the containers (29) and tanks (30) for sulphuric acid and oleum are arranged in a collecting trough (31) with controllable container base (32) and are provided with an extractor (33), and in that load-receiving vessels (34) are also installed for loading and temporary storage.

## Revendications

1. Procédé d'utilisation combinée de substances résiduelles, qui, lors de la fabrication du ciment et de l'acide sulfurique selon le procédé dit Müller-Kühne, sont envoyées sous forme préparée, conjointement avec la farine crue, au four tubulaire rotatif et sont décomposées à plus de 700°C avec le sulfate de calcium à l'aide de carbone réactif du point de vue chimique et également constitué en partie par des substances résiduelles, le CaO étant alors cuit à plus de 1200°C en présence de SiO₂, Al₂O₃ et Fe₂O₃, pour former du ciment et le gaz de fumée contenant du SO₂ étant libéré de sa poussière, lavé, mélangé à de l'air et converti en SO₃ ou en H₂SO₄,
caractérisé en ce
qu'on stocke et on conditionne séparément les constituants de la farine crue et les constituants de combustible ainsi que les substances résiduelles devant être utilisées, y compris les substances de compensation et les substances réactives nécessaires pour l'élimination de constituants non typiques du ciment, puis on les introduit de façon contrôlée, conformément à une formulation prédéterminée et au moyen d'un prélèvement et d'une exploitation d'échantillons, qu'on transporte séparément les substances résiduelles liquides et solides devant être utilisées comme matériau combustible, jusque dans le four tubulaire rotatif et qu'ensuite on les brûle conjointement avec une flamme d'assistance, et qu'on refroidit brusquement les gaz de fumée en fermant d'une manière étanche la tête du four et la chambre de sortie des gaz de fumée, en introduisant un gaz de refroidissement.

2. Procédé selon la revendication 1, caractérisé en ce qu'on remplace le constituant formé par l'anhydrite dans la farine crue, pour 20 - 100 %, par des substances résiduelles.

3. Procédé selon la revendication 1, caractérisé en ce qu'on ramène la poussière, qui apparaît, et ce de préférence au niveau de la tête du four, sur un court trajet, dans le four tubulaire rotatif, tout en maintenant l'étanchéité.

4. Procédé selon les revendications 1 à 3, caractérisé en ce qu'après avoir quitté le four tubulaire rotatif, le gaz de fumée est chargé avec la farine crue et est envoyé alors seulement et moyennant l'adjonction de la poussière au mélange, à la charge d'alimentation du four.

5. Procédé selon la revendication 1, caractérisé en ce que les constituants de farine crue et les substances résiduelles, qui arrivent, sont analysés au moyen d'un prélèvement d'échantillons, sont stockés temporairement et sont ajoutés en mélange d'une manière dosée et que des adaptations sont réalisées au moyen d'un prélèvement intermédiaire d'échantillons et éventuellement d'un conditionnement complémentaire et d'un apport complémentaire de corrections.

6. Procédé selon la revendication 1, caractérisé en ce que dans la mesure où cela est nécessaire, on fragmente, on sèche et éventuellement on soumet à une pyrolyse et on broie des substances minérales d'utilisation, qui sont humides et/ou formées de gros morceaux et/ou polluées par des hydrocarbures, avant le stockage.

7. Procédé selon la revendication 1, caractérisé en ce qu'on réalise l'injection de carbone et/ou l'injection de la sciure, imprégnée d'hydrocarbures et analogues et/ou l'injection d'acide sulfurique tout en produisant simultanément une gaine combustible enveloppante, produite par des lances disposées d'une manière enveloppante et prévues pour des combustibles liquides, le constituant formé par le carbone étant remplacé de préférence en totalité par des hydrocarbures et/ou d'autres substances résiduelles liquides.

8. Procédé selon la revendication 1, caractérisé en ce qu'à titre de complément ou à la place de la correction du constituant de la farine crue, on modifie le mode de fonctionnement du four au moyen de la vitesse de rotation du four et/ou de l'apport de combustible et d'oxygène.

9. Procédé selon la revendication 1 à la revendication 8, caractérisé en ce qu'on règle et on maintient une dépression au niveau de la tête du four ou de la chambre de sortie des gaz de fumée et également dans la zone dégageant encore de la poussière, y compris les systèmes de convoyage de la poussière.

10. Procédé selon la revendication 1, caractérisé en ce qu'on enrichit avec de l'oxygène l'air primaire pour accroître la charge de H₂SO₄ et la charge de farine crue dans le four tubulaire rotatif.

11. Procédé selon la revendication 1, caractérisé en ce que dans le gaz de fumée / le gaz brut obtenu lors de la production d'acide sulfurique, on couvre le besoin en O₂ avec du O₂ pur.

12. Procédé selon la revendication 1, caractérisé en ce qu'on sépare la poussière enrichie de chlorure alcalin et de sulfate alcalin, également au moyen d'un traitement séparé moyennant l'utilisation de l'effet paramagnétique dans des métaux, des alcalis et des substances minérales neutres, et qu'on envoie la poussière au four tubulaire rotatif en retirant les alcalis et les métaux.

13. Procédé selon la revendication 1, caractérisé en ce que pour éviter une corrosion à basse température tout en respectant une température finale de par exemple 250°C, on convertit la chaleur des gaz de fumée en énergie électrique.

14. Procédé selon la revendication 1, caractérisé en ce qu'on refroidit à contre-courant le clinker présent à la sortie, en utilisant de l'air de combustion secondaire aspiré.

15. Procédé selon la revendication 1, caractérisé en ce qu'on refroidit indirectement l'eau de trempe du gaz de fumée et on la fait circuler dans un circuit.

16. Procédé selon la revendication 1, caractérisé en ce qu'on envoie conjointement des aspirations fortement chargées d'odeurs et/ou polluées et de l'air primaire conjointement au four tubulaire rotatif.

17. Procédé selon la revendication 1, caractérisé en ce qu'on met la farine crue préalablement fluidisée et homogénéisée, sous la forme de morceaux pressés avant son envoi au four tubulaire rotatif.

18. Installation pour fabriquer du ciment et de l'acide sulfurique selon le procédé dit de Müller-Kühne, comportant un dispositif de fragmentation (2) pour les constituants de la farine crue, des silos (7), des tambours de séchage (9), un dispositif de fragmentation finale (16), le silo à farine crue (15), le four tubulaire rotatif (18), le brûleur (19) équipé d'un tube (20), la sortie (21) pour le clinker et l'unité de préparation du ciment (22), la chambre (24) de sortie des gaz de fumée, le dépoussiéreur (25), le laveur du gaz de fumée (27) et l'unité de fabrication de H₂SO₄ (28), et par conséquent pour la mise en oeuvre du procédé selon la revendication 1 et/ou les revendications 2 à 16, caractérisée en ce
que des silos de séparation (4,5) sont disposés en amont du dispositif de fragmentation (2) pour les constituants de la farine crue et les substances de compensation et les substances réactives, et que des réservoirs individuels (6) et des silos (7) sont prévus également pour les différents constituants combustibles et sont équipés d'une sortie commandée, que les canalisations d'amenée (44,45,46) pour les constituants combustibles liquides, gazeux et solides sont entourés par le tube (20) du brûleur, qui laisse subsister des canaux de balayage enveloppants, les canalisations s'étendant au-dessous du tube (51) pour les substances solides et débouchant dans le four tubulaire rotatif (18), que l'entrée (23) pour la farine crue et la sortie (113) pour la poussière de la chambre de sortie des gaz de fumée (24) comprennent des systèmes d'étanchéité (114,115) et qu'un refroidisseur à jet de soufflage (120) est disposé dans le courant de gaz de fumée en aval de la chambre (24) de sortie des gaz de fumée.

19. Installation selon la revendication 18, caractérisée en ce que les canalisations d'amenée (44,45, 46) comportent un tube enveloppe (52), dans lequel en plus du tube (53) véhiculant le milieu, un tube (54) véhiculant l'air d'une soufflante et/ou un tube (55) véhiculant le milieu provenant du pulvérisateur sont disposés réciproquement en parallèle.

20. Installation selon la revendication 18 et la revendication 19, caractérisée en ce que les tubes enveloppes (52) des canalisations utilisées en tant que canalisation (44) pour le goudron acide, canalisation pour des huiles usées, canalisation d'oxygène, canalisation (45) pour le solvant, canalisation (46) de l'acide formé ou canalisation pour huile visqueuse, sont agencés de manière à déboucher dans une buse (57) du brûleur, le tube (54) véhiculant l'air de la soufflante et/ou le tube (55) véhiculant le milieu provenant du pulvérisateur débouchant dans un canal de sortie (59) qui entoure la sortie médiane (58) du tube véhiculant le milieu et qui est formé par les parois d'un corps de tourbillonnement (60) et d'un capuchon d'injecteur (61) et sort obliquement au niveau de la ligne médiane du tube (53) véhiculant le milieu.

21. Installation selon la revendication 18, caractérisée en ce qu'il est prévu une canalisation de by-pass (71) qui contourne la chambre à poussières grossières (70), qui forme conjointement le dépoussiéreur (25).

22. Installation selon la revendication 18, caractérisée en ce que la colonne montante (65) comporte, en arrière de la chambre (24) de sortie du gaz de fumée, un sas (64) pour la farine crue, et qu'entre la chambre (24) de sortie du gaz de fumée et le dépoussiéreur (67) est disposé un cyclone (66), qui est agencé de manière à réaliser un transfert à ou dans l'entrée (23) pour la farine brute.

23. Installation selon la revendication 18, caractérisée en ce qu'en amont de l'électrofiltre (69), qui fait partie du dépoussiéreur (25), est installé un échangeur de chaleur ou une chaudière à récupération de chaleur (68), à laquelle sont associées une soufflante (72) située dans la canalisation aboutissant à l'électrofiltre (69) et une soufflante de renvoi (124) dans la canalisation aboutissant au refroidisseur à jet de soufflage (120).

24. Installation selon la revendication 18, caractérisée en ce qu'une turbine à condensat (108) est associée, côté vapeur, à la chaudière à récupération de chaleur (68).

25. Installation selon la revendication 18, caractérisée en ce que dans la canalisation du gaz de fumée (26) est disposé, en arrière de l'électrofiltre (69), un catalyseur en métal précieux (76) situé sur un support céramique monolithique, de préférence dans un conduit de by-pass (77).

26. Installation selon la revendication 18, caractérisée en ce que la colonne de refroidissement et de lavage (93) de la tour de refroidissement (92), qui comporte une canalisation de liaison (97) aboutissant à la tour vide (98) comportant son propre circuit de refroidissement indirect, est alimentée'en eau de refroidissement (95') par l'intermédiaire d'une canalisation annulaire (94), qui est raccordée à un échangeur de chaleur (95), la canalisation annulaire (94) comprenant un raccord (96) pour de l'eau fraîche.

27. Installation selon la revendication 18,
caractérisée en ce que la tour de soufflage (100), qui est réalisée en acier spécial ou en une matière plastique appropriée et/ou dont les structures internes sont réalisées en des matériaux correspondants, est montée dans la canalisation (99) d'évacuation des eaux usées de la tour vide (98).

28. Installation selon la revendication 18, caractérisée en ce que la sortie (101) de la tour de soufflage (100) est reliée à un mélangeur en cascade à 3 étages et à un filtre-presse à chambre ou à une installation d'électrolyse spéciale avec dépôt et obtention séparés des métaux.

29. Installation selon la revendication 18, caractérisée en ce que le récipient (29) et les cuves (30) pour l'acide sulfurique et l'acide sulfurique fumant sont disposés dans une cuve de collecte (31) comportant des fonds de récipients (32) pouvant être contrôlés et sont munis d'une aspiration (33) et que des bacs de collecte de chargement (34) sont également installés pour un chargement et un stockage temporaire.
